# EUROPÄISCHE PATENTSCHRIFT

(11) **EP 1 199 919 B1**
(45) Veröffentlichungstag und Bekanntmachung des Hinweises auf die Patenterteilung: **17.09.2003**
(21) Anmeldenummer: 00953071.8
(22) Anmeldetag: 19.07.2000
(51) Int. Cl.: A01D 45/02

(54) **ERNTEGERÄT FÜR STENGELARTIGES ERNTEGUT**
HARVESTING EQUIPMENT FOR STALK PLANTS
APPAREIL DE MOISSONNAGE POUR PLANTES SOUS FORME DE TIGE

(30) Priorität: 19.07.1999 DE 19933777; 19.07.1999 DE 19933778; 19.07.1999 DE 19933780; 19.07.1999 DE 19933779; 30.09.1999 DE 19947288; 26.10.1999 DE 19951459; 26.10.1999 DE 19951636; 01.11.1999 DE 19952566
(43) Veröffentlichungstag der Anmeldung: 02.05.2002
(73) Patentinhaber: Maschinenfabrik Bernard Krone GmbH, 48480 Spelle (DE)
(72) Erfinder: KRONE, Dr.-Ing.E.h. Bernard, D-48480 Spelle (DE); AHLER, Wilhelm, D-48703 Stadtlohn (DE); KELLER, Alfons, D-49497 Mettingen (DE)
(74) Vertreter: Busse, Dietrich, Dipl.-Ing.
(86) Internationale Anmeldenummer: EP0006885
(87) Internationale Veröffentlichungsnummer: WO01005218

(56) Entgegenhaltungen:
- DE-A- 3 324 898
- DE-A- 3 340 820
- DE-A- 3 623 380
- US-A- 5 040 362

## Beschreibung

Die Erfindung bezieht sich auf ein Erntegerät zum Ernten von Mais oder dergl. stengelartigem Erntegut nach dem Oberbegriff des Patentanspruchs 1. Ein derartiges, insbesondere als Vorsatzgerät für eine mobile Verarbeitungseinrichtung, wie etwa für einen Häcksler, vorgesehenes Erntegerät dient dem Aufnehmen, Abschneiden und dem Überführen von beispielsweise Maispflanzen an die Weiterverarbeitungseinrichtung.

Aus der eigenen älteren DE-A-33 24 898 ist eine Maschine zum Ernten von stengelartigem Erntegut bekannt, bei der das Erntegut von einer Förder- und Schneideinrichtung aufgenommen, abgeschnitten und einer Häckseleinrichtung zugeführt wird. Die Förder- und Schneideinrichtung weist ein quer zur Fahrtrichtung umlaufendes Kettensystem auf. Das Kettensystem besteht dabei aus zwei üblichen, übereinanderliegenden, endlosen und durch Umlenkräder geführten Langglieder-Rollenketten, denen Haltefinger mit Gegenhaltern und mit einem feststehenden Schneidmesser zusammenwirkende Gegenschneiden zum Abschneiden und Führen der stengelartigen Maispflanzen zugeordnet sind. Die Ketten weisen ober- und unterseitig jeweils Laschen auf, zwischen denen sich offene, durch Vertikalbolzen begrenzte Räume befinden. Das unterhalb des Kettensystems angebrachte, feststehende Schneidmesser und die dazugehörige Messerhalterung bilden eine ebene Gleitfläche zur Führung des Kettensystems. Um eine zuverlässige Führung der stengelartigen Maispflanze nach dem Abschneiden zu erreichen, ist hierbei eine derartige Anbringung von Haltefinger und Gegenhalter vorgesehen, daß die Maispflanze durch die gleichzeitige Anlage an dem Haltefinger und an dem Gegenhalter in einer gegenüber der Senkrechten leicht geneigten Stellung der Häckseleinrichtung zugeführt werden kann. Erst im nahe der Häckseleinrichtung gelegenen Umlenkbereich des Kettensystems erfolgt eine Freigabe der stengelartigen Maispflanze dadurch, daß durch die Umlenkung der oberen und der unteren Langglieder-Rollenkette um auf verschiedenen Achsen positionierten Umlenkrädern eine Aufhebung der durch Haltefinger und Gegenhalter erzeugten Haltewirkung eintritt. Ein hauptsächlicher Mangel der vorstehend beschriebenen Förder- und Schneideinrichtung ist darin zu sehen, daß unter den beim Einsatz vorherrschenden Betriebsbedingungen (Berührung mit Erde, Wasser und Erntegutresten) keine ausreichende Beständigkeit, insbesondere der Langglieder-Rollenketten, gegen Verschleiß erreichbar ist. Die Ketten setzen sich zu und verlieren ihre Förderfähigkeit. Ein Austausch einzelner Kettenglieder ist durch den vielteiligen Aufbau zudem recht aufwendig.

Der Erfindung liegt das Problem zugrunde, ein Erntegerät zum Ernten von Mais oder dergleichen stengelartigem Erntegut zu schaffen, mit dem das Erntegut in großen Arbeitsbreiten in einer störungsfreien Art und Weise abgeschnitten und einer sich daran anschließenden Verarbeitungseinrichtung zugeführt werden kann. Das Erntegerät soll dabei selbst unter den rauhen Betriebsbedingungen in der Landwirtschaft eine zufriedenstellende Lebensdauer erreichen.

Die Erfindung löst das Problem durch ein Erntegerät mit den Merkmalen des Anspruchs 1. Hinsichtlich der weiteren Ausgestaltung der Erfindung wird auf die Ansprüche 2 bis 63 verwiesen.

Bei dem erfindungsgemäßen Erntegerät ist ein Eindringen von Pflanzen- oder Bodenteilen in die Glieder des Endlosförderers nahezu vollständig verhindert. Durch die geschlossenen Vorderflächen ist der Endlosförderer wie eine gekapselte Einheit ausgebildet, bei der ein innenliegender Antrieb für den oder die Endlosförderer ohne negative Beeinflussung durch Pflanzenoder Bodenreste wirken kann.

Besonders vorteilhaft können, wenn zwei Halteebenen übereinander vorgesehen sind, die abgetrennten Halme in einer nahezu senkrechten Stellung quer zu ihrer Erstreckung transportiert werden, wobei auch der Raum zwischen den Halteebenen geschlossen ist, so daß auch keine Blätter, die etwa im unteren Bereich sich von den Halmen auswärts erstrecken, in die Kette eindringen können. Wenn eine in Betriebsstellung obere Halteebene gegenüber der unteren entgegen der Fahrtrichtung versetzt ist, ist verhindert, daß die abgemähten Stengel nach vorne vor das Arbeitstrum des Endlosförderers kippen und den Ernteablauf stören würden. Vielmehr werden die Halme auf diese Weise in einer leicht nach hinten geneigten Schrägstellung transportiert.

Wenn der Endlosförderer als einheitliches Funktionsglied, das insgesamt einstückig ist oder fest miteinander verbundene Teile aufweist, ausgebildet ist, ergibt sich eine einfache bauliche Form der jeweiligen Förderglieder. Diese können unproblematisch ausgetauscht werden. Bei mehreren zusammengesetzten Teilen zur Ausbildung eines Förderglieds können diese beispielsweise über formschlüssige Sicherungen aneinander drehgesichert sein und mit nur einer Zentralschraube aneinander festgelegt sein, was die Montage im Fertigungsprozeß, die Wartung und den Austausch erleichtert. Eine Vielteiligkeit, wie sie bei offenen Laschenketten gegeben war, ist dadurch vermieden.

Auch die Abweiseschilde zur Bildung der geschlossenen Vorderfläche sind in die Förderglieder vorteilhaft integriert und bilden einen festen Bestandteil eines jeweiligen Förderglieds aus.

Besonders vorteilhaft sind die Abweiseschilde derart ausgebildet, daß sie im Zuführungsbereich zu einem Häcksler oder dergleichen in Draufsicht eine knickfreie, geschlossene Bahnkurve bilden. Wenn der Zuführungsbereich etwa durch ein großes, rückseitig des Endlosförderers angebrachtes Umlenkrad gebildet ist, kann die Bahnkurve insgesamt dem Radius dieses Rades folgend gekrümmt sein. Hierfür haben dann die einzelnen Abweiseschilde jeweils eine bombierte, nach vorne ausgewölbte Form, so daß sie im Zuführungsbereich insgesamt eine Kreislinie bilden. Sofern im Zuführungsbereich, etwa über zwei Umlenkräder, eine zwischen diesen bewirkte Parallelstellung der Förderglieder bewirkt ist, kann alternativ auch eine planebene Form der Abweiseschilde verwirklicht sein.

Durch die geschlossene, knickfreie Bahnkurve ist es möglich, im Zuführungsbereich für die Endlosförderer Abstreifer vorzusehen, die dann unbeweglich sein können und jeweils einen konstanten Abstand zu den Abweiseschilden der Förderglieder aufweisen.

Besonders vorteilhaft sind diese Abstreifer beidseits einer Eintrittsöffnung des Weiterverarbeitungsgeräts angeordnet und bilden seitliche Führungsflächen für das Erntegut. Die Zuführung von Erntegut in den Häcksler erfolgt praktisch verlustfrei.

Wenn in den Halteebenen jeweils Plattenkörper ausgebildet sind, die in der Ebene des Plattenkörpers Vorsprünge als Mitnehmer aufweisen, können die Mitnehmer einstückig mit den Plattenkörpern ausgebildet sein, was eine besonders hohe Stabilität mit sich bringt und baulich mit erheblich weniger Aufwand zu realisieren ist als etwa ein Anschweißen der Mitnehmer an Teilbereiche der Förderglieder.

Die Kettenglieder können insgesamt als einstückige Gußkörper ausgebildet sein.

Von besonderer Bedeutung für eine störungsfreie Aufnahme und Führung des stengelartigen Erntegutes durch die Förder- und Führungselemente des Endlosförderers sind erfindungsgemäß die Form der zwischen den Vorsprüngen befindlichen Abstände, die als Aufnahmeräume für die abgetrennten Halme dienen, sowie die räumliche Anordnung der Plattenkörper der mittleren und der oberen Förder- und Führungsebenen zueinander. In einer vorteilhaften Ausführungsform weisen die die Lücke begrenzenden Kanten eines in der mittleren Förder- und Führungsebene angebrachten und bezüglich der Umlaufrichtung des Endlosförderers vorlaufenden Vorsprunges und eines in der oberen Förderund Führungsebene befindlichen und bezüglich der Umlaufrichtung des Endlosförderers nachlaufenden Vorsprunges eine parallele Anordnung zueinander auf. Ein beispielsweise an diesen Kanten anliegender Maisstengel nimmt dabei eine entgegen der Umlaufrichtung des Endlosförderers geneigte Stellung ein. Des weiteren ist vorgesehen, daß die die Lücke zur Aufnahme des stengelartigen Erntegutes begrenzenden Kanten unter einem spitzen Winkel zu einer durch die endseitigen Schwenkachsen eines jeden Förder- und Führungselementes führenden und damit parallel zur Umlaufrichtung des Endlosförderers ausgerichteten Ebene an dem jeweiligen Plattenkörper angeordnet sind. Dadurch wird eine Haltewirkung des stengelartigen Erntegutes in den jeweiligen zwischen den Vorsprüngen befindlichen Lücken erzeugt, durch die eine zuverlässige und damit störungsfreie Überführung des abgeschnittenen stengelartigen Ernteguts an eine nachfolgende Verarbeitungseinrichtung in der Art eines Häckselaggregates erreichbar ist. Eine vorteilhafte Bauform eines in der mittleren Förder- und Führungsebene befindlichen Vorsprunges ergibt sich dann, wenn dieser Vorsprung bei einer Betrachtung aus einer der Förder- und Führungsebenen die Form eines entgegen der Umlaufrichtung des Endlosförderers verschobenen Rechtecks (Parallelogramm) , eventuell mit abgerundeten Eckbereichen, einnimmt, während in der oberen Förder- und Führungsebene ein Vorsprung mit einer dreiecksförmigen Gestalt bevorzugt wird.

Im Rahmen der Erfindung sind aber auch noch weitere Ausführungsformen der zwischen den Vorsprüngen der Plattenkörper in der mittleren und oberen Förder- und Führungsebene zur Aufnahme des stengelartigen Erntegutes dienenden Lücken vorstellbar. So ist es beispielsweise möglich, die Plattenkörper mit jeweils zwei Vorsprüngen zu versehen, wobei die die Lücken begrenzenden Kanten entweder annähernd parallel zueinander ausgerichtet sind und/oder die Abstände zwischen den die Lücken begrenzenden Kanten in Fahrt- und Arbeitsrichtung gesehen größer werden.

Gemäß einem weiteren vorteilhaften Aspekt der Erfindung sind den Mitnehmern bzw. deren Haltekörpern in der unteren Förderund Führungsebene und den Plattenkörpern der mittleren und oberen Förder- und Führungsebene an der in Bezug zur Umlaufrichtung des Endlosförderers vorlaufenden Seite kreisbogenförmige Segmente und an der nachlaufenden Seite kreisausschnittförmige Aussparungen zugeordnet, welche im aneinandergereihten Zustand der Förderglieder mit einem geringen Spiel ineinandergreifen. Daraus ergeben sich zum einen einfache und wirkungsvolle Abdeckungen zum Schutz von Lagerelementen, die sich im Verbindungsbereich zweier Förderglieder befinden, und zum anderen wird durch diese Bauweise vermieden, daß an aneinandergereihten Förder- und Führungselementen vorstehende Kanten entstehen, die zu Störungen im Ablauf des Erntevorganges führen können.

Ein weiterer vorteilhafter Aspekt liegt in der Art der Verbindung zwischen den aneinandergereihten Förder- und Führungsgliedern eines Endlosförderers. Dabei ist vorgesehen, eine schwenkbewegliche Verbindung zwischen zwei benachbarten Förder- und Führungselementen zu schaffen, bei der an den Verbindungsstellen keine in Verbindung mit Schmutz zu großem Verschleiß neigende Gleitreibung auftritt. Um dies zu erreichen, weist das Förder- und Führungsglied an der in Bezug zur Umlaufrichtung des Endlosförderers nachlaufenden Seite ein Lagergehäuse auf, in dem als abgedichtete Wälzlager ausgebildete Lagerelemente untergebracht sind. Um den Montageaufwand beim Zusammenbau eines so gestalteten Endlosförderers gering zu halten, ist weiterhin vorgesehen, die Förderglieder so auszubilden, daß diese aus einem unteren und einem oberen Abschnitt zusammensetzbar und arretierbar sind. Dadurch wird es ermöglicht, daß beim Zusammenfügen der Abschnitte ein dem oberen Abschnitt zugeordneter Lagerbolzen eines Förderglieds in ein Lagerelemente enthaltendes Lagergehäuse des unteren Abschnittes eines in Bezug zur Umlaufrichtung des Endlosförderers vorlaufenden Förderglieds eingreift. Beide Abschnitte sind dann beispielsweise über eine Schraubverbindung miteinander verbindbar. Als Lagerelemente sind dabei abgedichtete Wälzlager verwendbar, wobei vorzugsweise abgedichtete Rillenkugellager eingesetzt werden. Die Lagergehäuse bilden gleichzeitig Ansätze für einen Antrieb mittels eines Antriebsrades, welches den Ansätzen entsprechende Ausnehmungen aufweist.

Wie aus den vorstehenden Ausführungen hervorgeht, umfaßt ein erfindungsgemäß gestalteter Endlosförderer ein aus einer Vielzahl von schwenkbeweglich aneinandergereihten Fördergliedern gebildetes Fördersystem, welches zumindest über ein Antriebsrad und ein Umlenkrad geführt und antreibbar ist. In einer Weiterbildung der Erfindung ist es auch denkbar, in den jeweiligen Umlenkbereichen des Endlosförderers und insbesondere im Abgabe- und Übergabebereich des Endlosförderers an eine Verarbeitungseinrichtung ein Antriebsrad und mehrere Umlenkräder einzusetzen. Weiterhin ist durchaus vorstellbar, dem Antriebsrad des Endlosförderers in einem Bereich nahe dem - Übergabebereich des Endlosförderers Zusatzförderer oder auch feststehend ausgebildete Leitorgane zur Verbesserung der Zuführung des stengelartigen Erntegutes an die Verarbeitungseinrichtung zuzuordnen, die auch vom Antrieb des Antriebrades mit Antriebsenergie versorgt werden können.

Besonders günstig sind unterhalb der Endlosförderer bewegliche Schneidmesser angeordnet, beispielsweise rotierende Schneidmesser, die entweder im freien Schnitt oder in Zusammenwirken mit den Mitnehmern der Schneidebene wirken.

Vorteilhaft ist weiterhin im Bereich der Zuführung eine Gegenschneide vorgesehen, die von den Mitnehmern der Schneidebene und weiteren, in dichtem Abstand darüberliegenden Mitnehmern unter- bzw. überlaufen wird, so daß an den Mitnehmern hängenbleibende Pflanzenreste, insbesondere Blattreste, von der feststehenden Gegenschneide zerteilt werden und sich nicht um die Mitnehmer wickeln können.

Weitere Vorteile und Einzelheiten ergeben sich aus nachfolgend beschriebenen und in der Zeichnung dargestellten Ausführungsbeispielen des Gegenstandes der Erfindung. In der Zeichnung zeigt:
- Fig. 1: eine perspektivische Darstellung eines erfindungsgemäßen Erntegerätes mit zwei Einzug- und Fördereinrichtungen, die spiegelbildlich zueinander ausgebildet sind,
- Fig. 2: eine vergrößerte, teilweise abgebrochene Darstellung der Einzelheit X in Fig. 1,
- Fig. 3: eine Darstellung ähnlich Fig. 2, jedoch ohne Blatt- und Pflanzenheber,
- Fig. 4: eine abgebrochene perspektivische Darstellung eines erfindungsgemäßen Endlosförderers mit einem schematisch dargestellten Pflanzenstengel, entgegen der Fahrtrichtung gesehen,
- Fig. 5: eine perspektivische Ansicht eines Förder- und Führungselementes in einer nach Abschnitten auseinander gezogenen Darstellung,
- Fig. 6: eine Ansicht von oben auf das in Fig. 5 veranschaulichte Förder- und Führungselement während der Förderung eines Pflanzenstengels,
- Fig. 7: eine abgebrochene perspektivische Darstellung des erfindungsgemäßen Erntegerätes aus einer Betrachtungsrichtung gemäß Pfeil B in Fig. 1,
- Fig. 8: eine vergrößerte, teilweise abgebrochene perspektivische Darstellung des Antriebes eines Endlosförderers als Einzelheit Y aus Fig. 1,

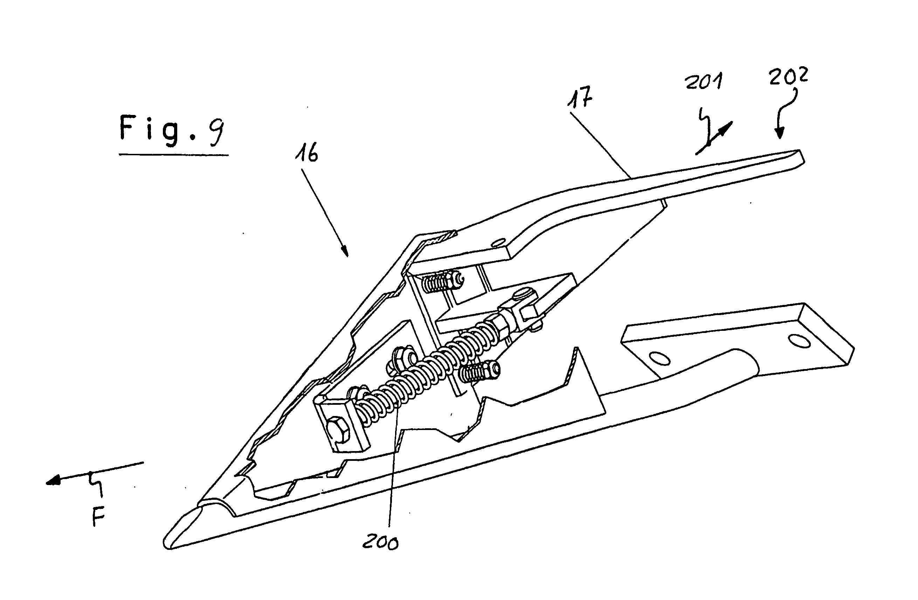

- Fig. 9: eine Einzelteildarstellung eines Pflanzenhebers mit daran federnd angeordnetem Führungsbügel,
- Fig. 10: eine ähnliche Darstellung wie Fig. 1 mit einem Selbstfahrer als Träger des Erntegeräts und der Weiterverarbeitungseinrichtung,
- Fig. 11: eine alternative Ausbildung eines Förderglieds mit einer Führungsanformung in der unteren Ebene,
- Fig. 12: eine teilweise aufgebrochene Ansicht des alternativen Förderers mit Fördergliedern nach Fig. 11 von oben,
- Fig. 13: einen perspektivisch dargestellten Teilbereich des Arbeitstrums des alternativen Förderers in abgebrochener Darstellung,
- Fig. 14: den Umlenkbereich am Rand der Zuführung des alternativen Förderers,
- Fig. 15: einen Schnitt entlang der Linie XV-XV in Fig. 12,
- Fig. 16: eine ähnliche Darstellung wie Fig. 5 eines alternativen Förderglieds,
- Fig. 17: eine Explosionsdarstellung des unteren Teils des Förderglieds nach Fig. 16, etwa entsprechend einem Schnitt XVII-XVII in Fig. 16,
- Fig. 18: eine ähnliche Ansicht wie Fig. 7 einer alternativen Ausführungsform einer festen Gegenschneide im Übergabebereich.

Das Erntegerät 1 kann insbesondere als Vorsatzgerät 2 für eine mobile Verarbeitungseinrichtung S in der Art eines Häckslers zum reihenabhängigen oder reihenunabhängigen Ernten von stengelartigem Erntegut 3 wie Mais oder dergleichen eingesetzt werden. In der Regel werden Maisfelder in Reihen angebaut und auch geerntet, was die Vorteile mit sich bringt, daß Lenkautomaten für die Erntegeräte 1 eingesetzt werden können und zudem eine gleichmäßigere Fahrt erreicht wird, als wenn quer zu den Anhäufungen, die sich im Bereich der Pflanzstengel bilden, durch die zwischen den Pflanzreihen befindlichen Vertiefungen gefahren wird. Bei einer derartigen reihenunabhängigen Erntung kommt es vor, daß das Vorsatzgerät teilweise in den Boden eindringt oder zu hoch herausragt, so daß eine gleichmäßige Schnitthöhe nicht immer gewährleistet ist. Gleichwohl ist das erfindungsgemäße Erntegerät 1 auch zur reihenunabhängigen Ernte sehr gut zu verwenden.

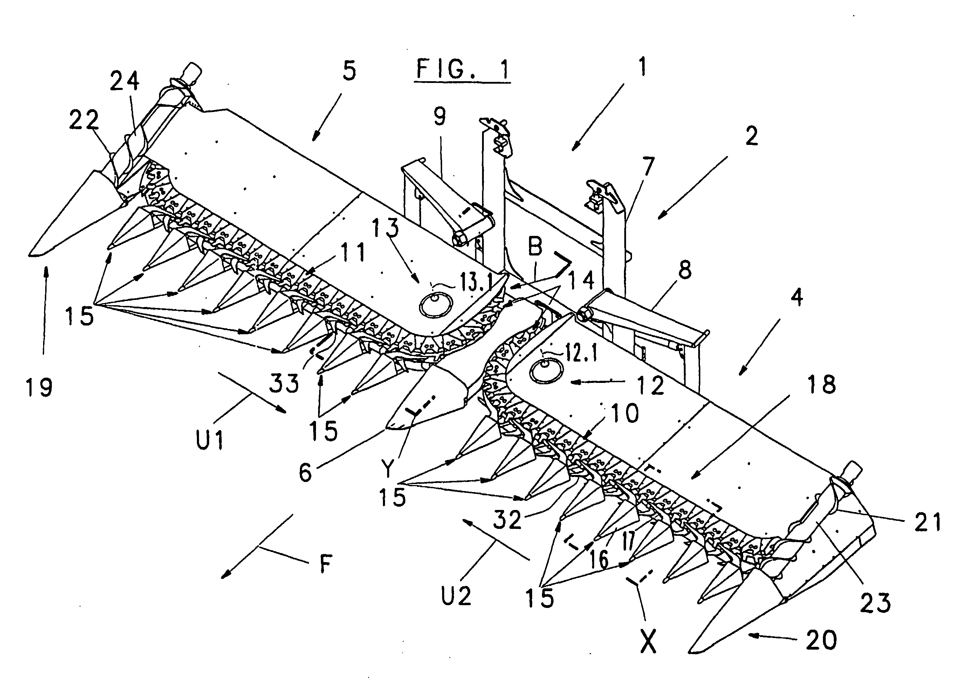

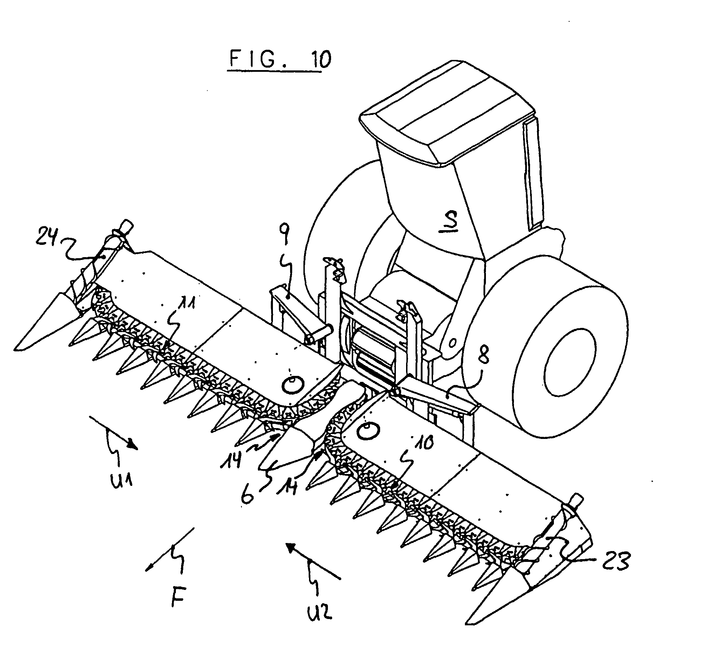

Das Erntegerät 1 gemäß Fig. 1 besteht aus zumindest einer und vorzugsweise, wie hier dargestellt, aus zwei in der längsten Ausrichtung quer zur Fahrt- und Arbeitsrichtung F ausgerichteten, zueinander spiegelbildlich ausgeführten Einzugs- und Fördereinrichtungen 4,5, die so nebeneinander angeordnet sind, daß ein durchgehender Erntegutstreifen mit großer Arbeitsbreite abgeerntet werden kann. Zwischen den Einzugs- und Fördereinrichtungen 4,5 befindet sich eine mittlere Teilerspitze 6 zur Aufteilung des zu bearbeitenden Erntegutstreifens auf die Einzugs- und Fördereinrichtungen 4,5. Zur Aufhängung des Erntegerätes 1 an einer Verarbeitungseinrichtung S ist ein Tragrahmen 7 vorgesehen, der in etwa um die Fahrt- und Arbeitsrichtung F schwenkbar angelenkte Tragarme 8,9 umfaßt. Mit Hilfe dieser Tragarme 8,9 können die Einzugs- und Fördereinrichtungen 4,5 aus der in Fig. 1 dargestellten Arbeitsund Betriebsstellung in eine Transportstellung überführt werden, in der sie eine in etwa vertikal ausgerichtete (hochgeklappte) Stellung mit einer geringen Transportbreite einnehmen und bei einer Verwendung als Vorsatzgerät 2 für eine selbstfahrende Arbeitsmaschine (Fig. 10) für den Fahrer eine möglich geringe Sichtbehinderung nach vorn darstellen. Dazu ist die Ausrichtung der Schwenkachsen der Tragarme 8,9 am Tragrahmen 7 so gewählt, daß die Schwenkachsen, in Fahrt- und Arbeitsrichtung F gesehen, leicht auseinanderlaufen und/oder eine nach unten geneigte Ausrichtung aufweisen, so daß der Fahrer in Transportstellung auf die Rückseiten, an denen das Leertrum verläuft, der Fördereinrichtungen 4,5 schaut und ansonsten ein freies Sichtfeld hat. Gemäß der Erfindung besteht jede Einzugs- und Fördereinrichtung 4,5 aus einem umlaufenden Endlosförderer 10,11, welcher von drehbar gelagerten Antriebsrädern 12,13 mit Drehachsen 12.1, 13.1 nahe einem Abgabe- und Übergabebereich 14 des Endlosförderers 10,11 an die Verarbeitungseinrichtung, etwa einen Häcksler, sowie von nicht dargestellten Umlenkrädern, die eine ähnliche Form wie die Antriebsräder 12,13 haben, in einem äußeren Umlenkbereich führund antreibbar ist. Die Umlaufrichtung der Endlosförderer 10,11 ist mit U1 und U2 bezeichnet, verläuft in etwa quer zur Fahrtrichtung F und ist zur Mitte des Erntegerätes 1 hin gerichtet. Weitere denkbare Ausführungen eines Erntegerätes können aber auch so gestaltet sein, daß die Umlaufrichtungen U1,U2 der Endlosförderer 10,11 entgegen der Fahrt- und Arbeitsrichtung F schräg nach hinten und zur Mitte des Erntegerätes verlaufen.

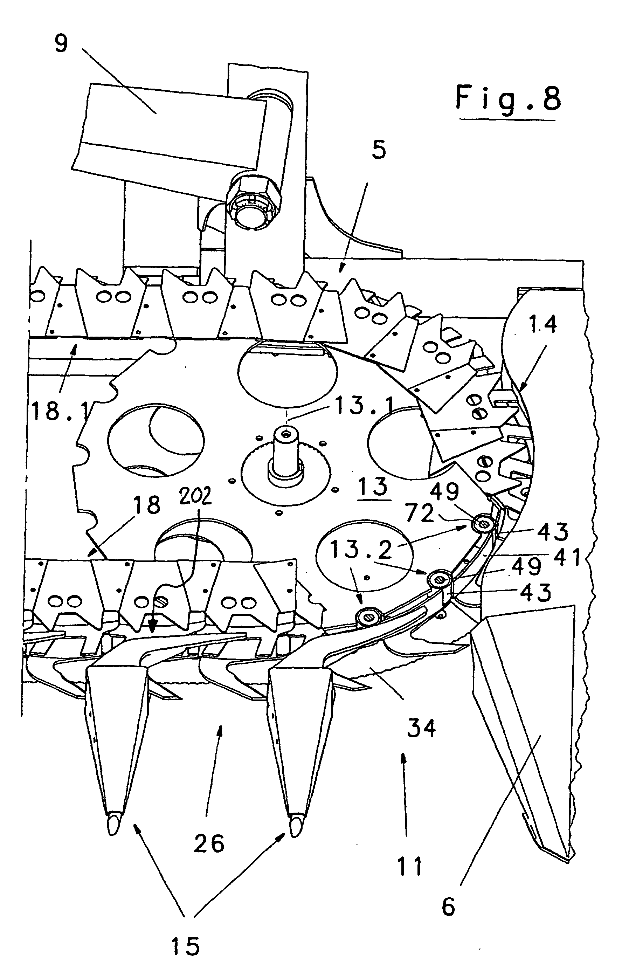

Wie weiterhin aus der Fig. 1 zu entnehmen ist, weist jede Einzugs- und Fördereinrichtung 4,5 zum einen zur Erleichterung der Ernte von liegendem oder teilweise liegendem stengelartigem Erntegut und zum anderen als Unterstützung des Endlosförderers 10,11 bei der Zuführung des stengelartigen Erntegutes an die Verarbeitungseinrichtung Blatt- und Pflanzenheber 15 auf, welche im wesentlichen aus einer pyramidenförmigen Teilerspitze 16 und einem Führungsbügel 17 bestehen. Dabei sind die Führungsbügel 17 so geformt, daß diese zunächst in etwa parallel zu einem Arbeitstrum 18 des Endlosförderers 10,11 verlaufen und bis auf einen zum Passieren des stengelartigen Erntegutes 3 erforderlichen Abstand an den in Umlaufrichtung U1,U2 nächsten Blatt- und Pflanzenheber 15 heranreichen. Der Führungsbügel 17 ist dabei federnd gelagert, wobei er durch die Kraft einer Druckfeder 200 in Richtung des Pfeils 201 vorgespannt ist. Diese Vorspannung wirkt im wesentlichen entgegen der Fahrtrichtung F und ist gegen das Arbeitstrum 18 des Endlosförderers 10 oder 11 gerichtet. Dadurch ist ein Förderkanal 202 zwischen dem Führungsbügel 17 und dem Arbeitstrum 18 für das abgetrennte Erntegut 3 gebildet, das Erntegut 3 ist in diesem Kanal 202 sicher gehalten. Der Förderkanal erstreckt sich in der Ausbildung nach Fig. 1 quer zur Fahrtrichtung F. Dadurch, daß die Führungsbügel 17 entgegen der Federkraft verlagerbar sind, können auch dickere Halme 3 oder Ansammlungen von diesen gleichzeitig durch den Förderkanal 202 (Fig. 8) in Umlaufrichtung U1 bzw. U2 gefördert werden. Die Druckfeder 200 ist hinsichtlich ihrer Härte verstellbar.

Des weiteren ist jeder Einzugs- und Fördereinrichtung 4,5 zumindest ein Halm- und Pflanzenteiler 19,20 als Trennelement zwischen dem zu bearbeitenden und stehenbleibenden Erntegut zugeordnet, wobei das Trennen des stengelartigen Erntegutes durch beispielsweise antreibbare, den Halm- und Pflanzenteilern 19,20 zugeordnete und mit einem Schneckengang 21,22 bestückte Walzenelemente 23,24 unterstützt werden kann.

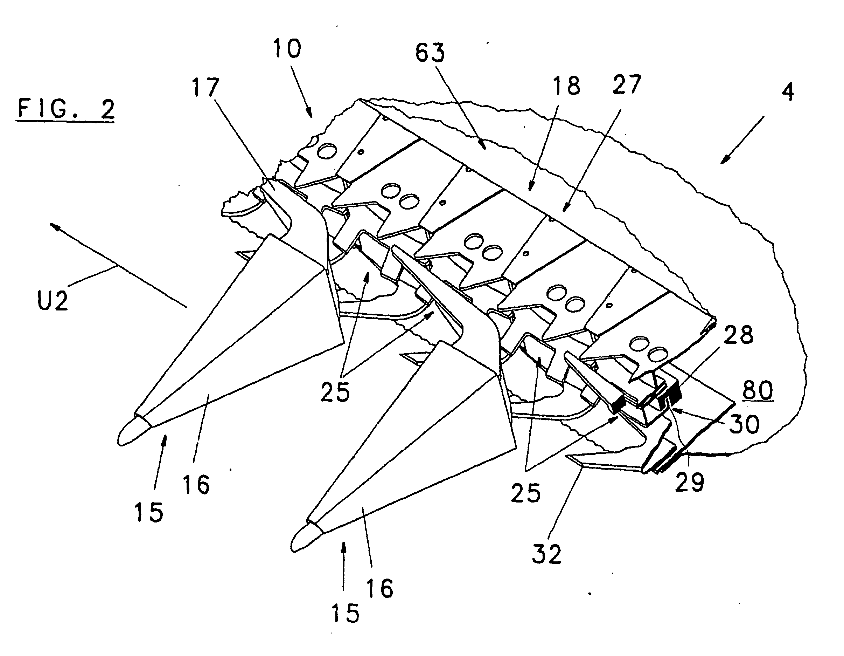

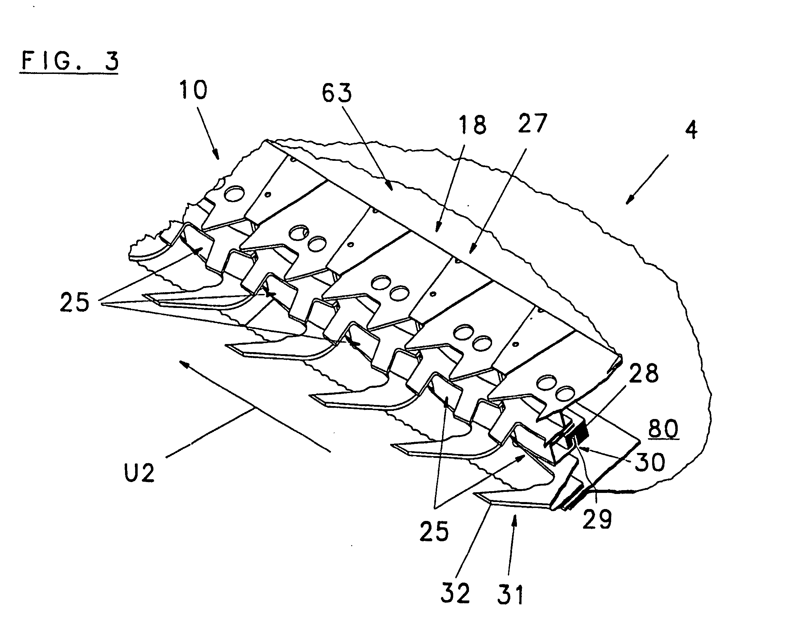

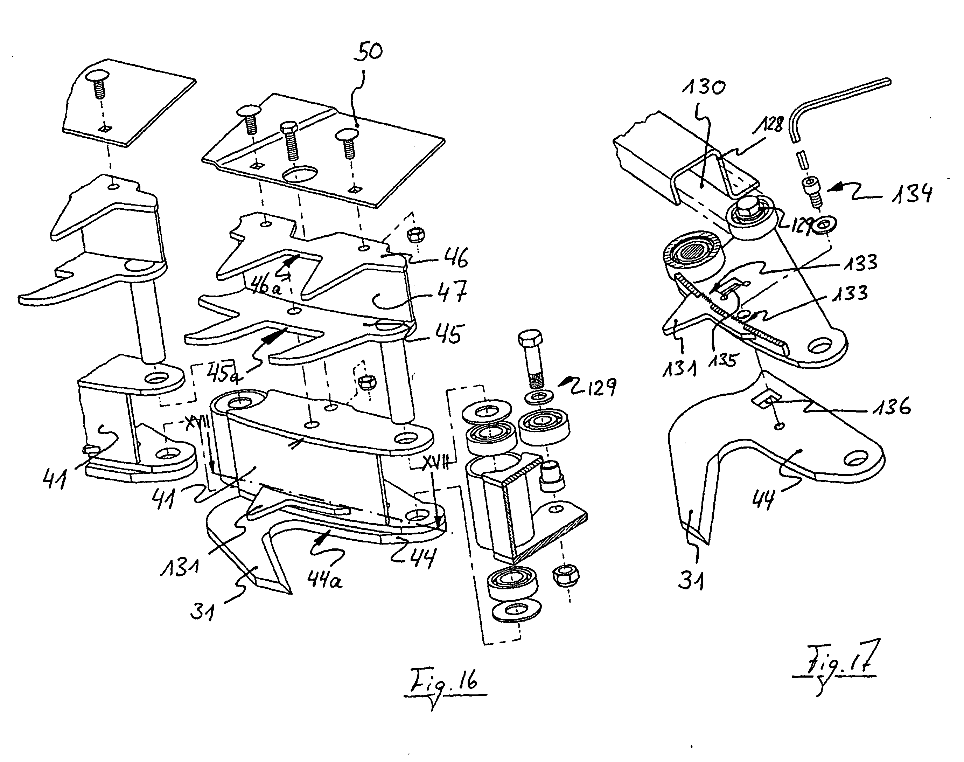

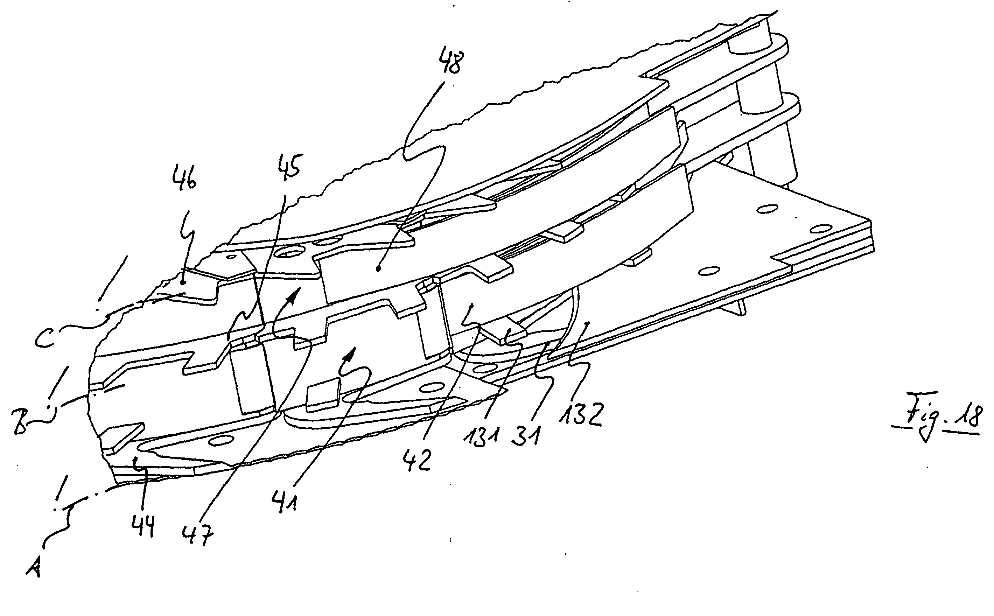

In den Figuren 2 und 3 sind Teilabschnitte der erfindungsgemäßen Einzugs- und Fördereinrichtung 4,5 in einer vergrößerten perspektivischen Ansicht dargestellt, wobei in Fig. 3 keine Blatt- und Pflanzenheber 15 vorgesehen sind. Wie insbesondere aus diesen Figuren hervorgeht, besteht ein erfindungsgemäßer Endlosförderer 10,11 aus einer Vielzahl von aneinandergereihten Fördergliedern 25,26 und stellt somit ein flexibles Fördersystem 27 dar, welches entlang unterschiedlicher Bewegungsbahnen geführt sein kann. Im dargestellten Ausführungsbeispiel werden die Förder- und Führungsglieder 25,26 des flexiblen Fördersystems 27 im Arbeitstrum 18 entlang einer geradlinig ausgebildeten und durch eine Führungsleiste 28 vorgegebenen Bewegungsbahn geführt, wobei eine Haltekante 29 eines jeden Förder- und Führungselementes 25,26 in einen Schlitz 30 der Führungsleiste 28 eingreift. Wie in Fig. 16 und 17 dargestellt ist, kann an Stelle der Haltekante 29 auch ein Gleit- oder Wälzlager auf einem Zapfen 129 vorgesehen sein, das in einem Führungskanal 130 der Führungsleiste 128 führbar ist. In diesem Fall ist die Reibung der Führung durch die Lagerung vermindert. Beispielsweise ist dann statt der Gleitreibung eine Rollreibung der Förderglieder 25,26 zu ihrer rückseitigen Halterung und Führung im Umlaufsinn U1 oder U2 ermöglicht, was den Reibungswiderstand verringert.

Weiter ist in Fig. 17 sichtbar, daß das Schneidmittel 31, das aus Verschleißgründen leicht auswechselbar sein sollte, nur mit einer einzigen Zentralschraube 134 gehalten ist, eine darüberhinausgehende Lagesicherung findet durch eine ausgebogene Lasche 135 statt, die in einer Ausnehmung 136 des das Schneidmittel 31 haltenden Plattenkörpers 44 eingreift.

An das geradlinige Arbeitstrum 18 schließt sich eine kreisbogenförmige Umlenkung (Fig. 1) nahe dem Abgabe- und Übergabebereich 14 des Endlosförderers 10,11 sowie ein ebenfalls geradlinig geführtes Leertrum 18.1 und eine weitere kreisbogenförmige Umlenkung im äußeren Umlenkbereich an. In einer alternativen Ausbildung der Erfindung kann aber auch entweder das Arbeitstrum 18 eine in oder entgegen der Fahrt- und Arbeitsrichtung F gewölbt geformte Bewegungsbahn aufweisen oder in den Umlenkbereichen des Endlosförderers 10,11, insbesondere in dem nahe dem Abgabe- und Übergabebereich 14 gelegenen inneren Umlenkbereich, eine Umlenkung des Endlosförderers 10,11 um mehrere Antriebs- und/oder Umlenkräder erfolgen. Dann läuft der Endlosförderer 10,11 im Umlenkbereich zumindest über ein Teilstück geradlinig entgegen der Fahrtrichtung.

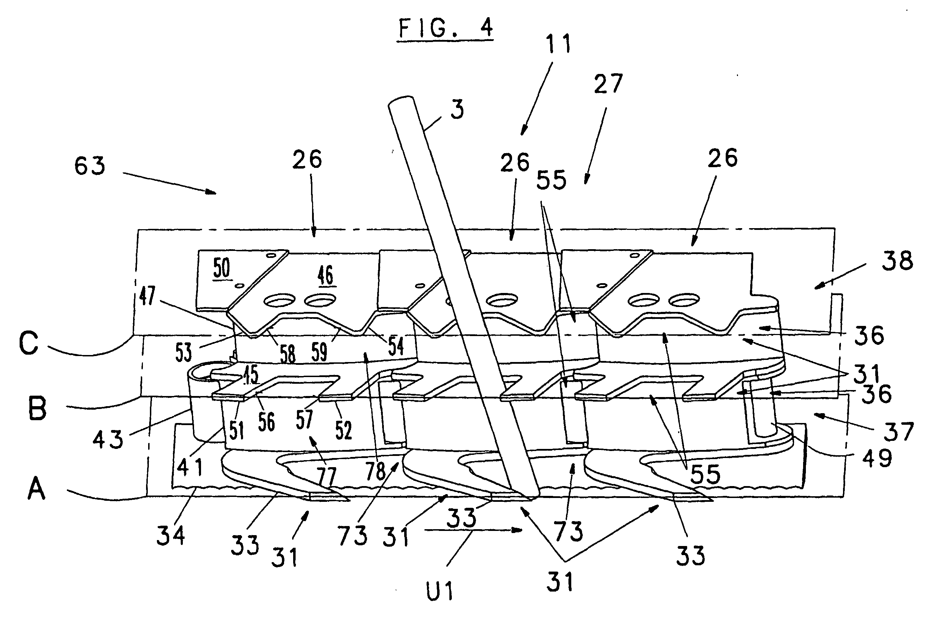

Der grundsätzliche Aufbau einer ersten Version eines Förderund Führungselementes 25,26 sowie ein daraus zusammengesetzter Endlosförderer 10,11 nach der Erfindung geht aus Fig. 4 bis 6 hervor. Wie insbesondere aus Fig. 4 zu ersehen ist, sind die Förder- und Führungselemente 25,26 der Endlosförderer 10,11 in drei, in einem Abstand übereinanderliegende Förder- und Führungsebene A,B,C aufgeteilt. In diesen Förder- und Führungsebenen sind Mitnehmer 31 angebracht, welche entweder die Funktion einer Gegenschneide 32,33 übernehmen und dadurch in Zusammenwirkung mit einem unterhalb der Förder- und Führungselemente 25,26 befindlichen und feststehenden Schneidmessers 34 eine Mäh- und Schneideinrichtung 35 bilden oder in der Funktion eines Halters 36 zur Führung des stengelartigen Erntegutes 3 bei der Überführung an eine Verarbeitungseinrichtung in der Art eines Häckselaggregates eines Häckslers vorgesehen ist. In der Förder- und Führungsebene A sind dabei die als Gegenschneiden 32,33 ausgebildeten Mitnehmer 31 angeordnet, während in den Förder- und Führungsebenen B,C die als Halter 36 vorgesehenen Mitnehmer 31 angebracht sind. Im Rahmen der Erfindung ist aber auch eine Unterteilung der Förder- und Führungselemente 25,26 in zwei oder in mehr als drei Förder- und Führungsebenen vorstellbar.

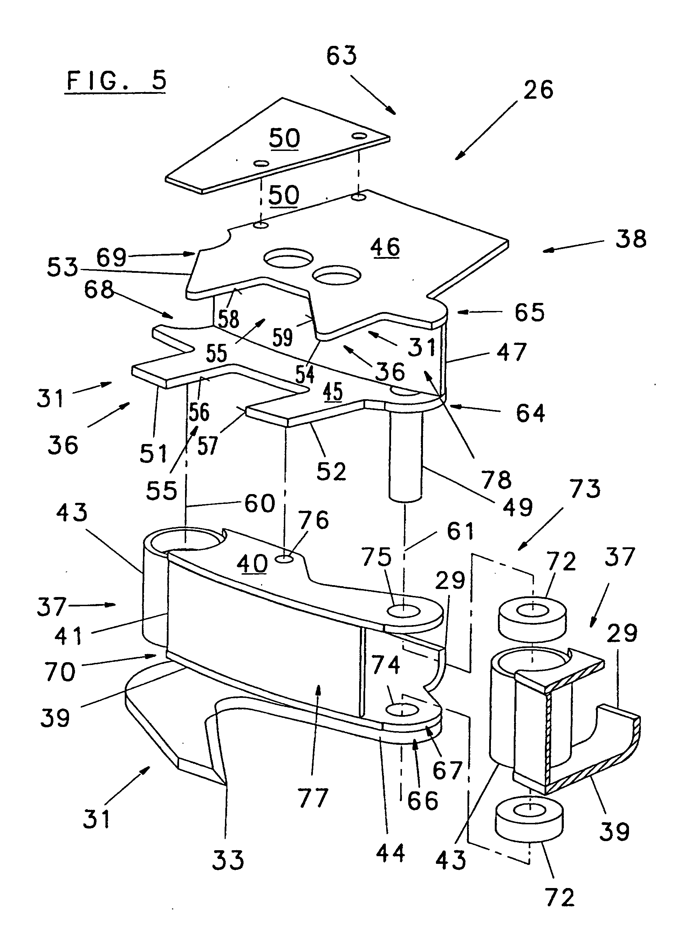

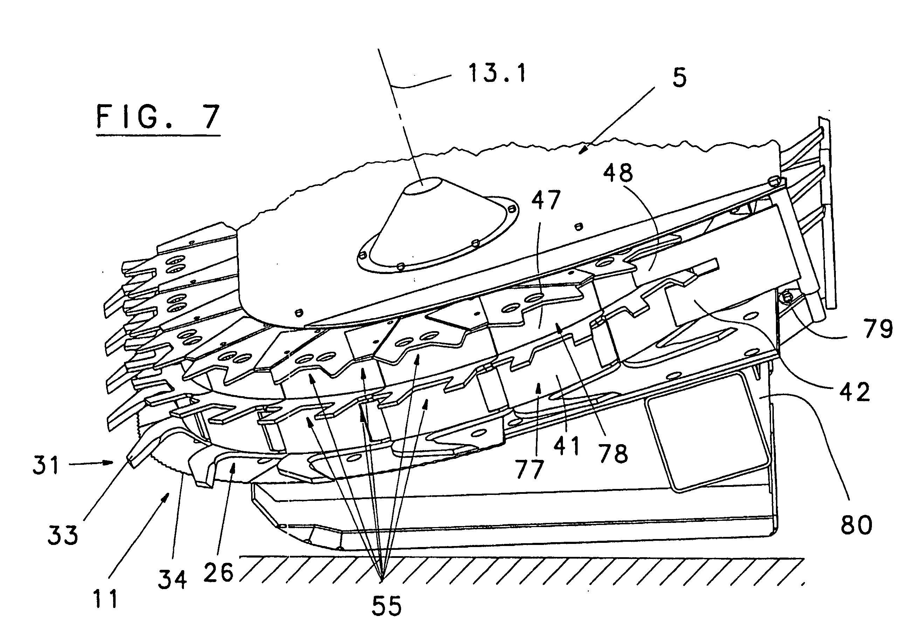

In Fig. 5 ist eine vorteilhafte Ausführungsform eines Förderund Führungselementes 25,26 wiedergegeben. Dabei ist es aus Gründen einer einfachen Montage beim Zusammenbau eines Endlosförderers 10,11 vorgesehen, die Förder- und Führungselemente 25,26 in einen unteren Abschnitt 37 und einen oberen Abschnitt 38 zu unterteilen. Die Abschnitte 37,38 des Förder- und Führungselementes 25,26 sind vorzugsweise so gestaltet, daß die Trennstelle, an der die Abschnitte 37,38 miteinander verbunden werden können, in der Förder- und Führungsebene B liegt. Daraus ergibt sich, daß der untere Abschnitt 37 im wesentlichen aus einem Haltekörper 39 zur Aufnahme des als Gegenschneide 32,33 ausgebildeten Mitnehmers 31, einer oberen Verbindungsplatte 40 und einem zwischen dem Haltekörper 39 und der oberen Verbindungsplatte 40 ähnlich einem Verbindungssteg fest verschweißt angebrachten Führungskörper 41 für einen Abstreifer 42 (Fig. 7) besteht. An der in Bezug zur Umlaufrichtung U1,U2 des Endlosförderers 10,11 nachlaufende Seite des Förder- und Führungselementes 25,26 ist ein Lagergehäuse 43 vorgesehen, welches ebenfalls durch eine Schweißverbindung mit den übrigen Teilen des unteren Abschnittes 37 verbunden ist. Das Lagergehäuse 43 bildet gleichzeitig einen Ansatz für den Antrieb des Endlosförderers 10,11 über ein Antriebsrad 12,13. Das Antriebsrad 12,13 (Fig. 8) hat wiederum den Ansätzen bzw. den Lagergehäusen 43 entsprechende Ausnehmungen 13.2. Der Endlosförderer 10,11 bildet so insgesamt eine kompakte geschlossene Einheit. Zur Befestigung des als Gegenschneide 32,33 ausgeführten Mitnehmers 31 sind an der Unterseite des Haltekörpers 39 beispielsweise Paßstifte (nicht dargestellt) vorgesehen, die in ein Lochbild in einem plattenförmigen Teil 44 der Gegenschneiden 32,33 eingreifen, so daß die Gegenschneiden 32,33 dann durch das Einschrauben von als Senkschrauben ausgebildeten Befestigungsschrauben von der Unterseite der Gegenschneiden 32,33 aus arretierbar sind. Die Gegenschneiden 32,33 selbst sind hakenförmig ausgebildet, wobei an dem gegenüber dem unteren Abschnitt 37 der Förder- und Führungselemente 25,26 vorstehenden Teil eine keilförmig angeschrägte Schneidkante angebracht ist. Der obere Abschnitt 38 besteht im wesentlichen aus einem in der das Halmgut haltenden Förder- und Führungsebene B liegenden Plattenkörper 45 und einem in der Halteebene C befindlichen Plattenkörper 46, wobei zwischen den beiden Plattenkörpern 45,46 ähnlich einem Verbindungssteg ein weiterer aufrechtstehender Abweiseschild 47 zur Ausbildung der geschlossenen Vorderfläche und zum Zusammenwirken mit dem Abstreifer 48 (Fig. 7) über eine Schweißverbindung mit den Plattenkörpern 45,46 fest verbunden ist. In dem Plattenkörper 45 der Förder- und Führungsebene B ist an der in Bezug zur Umlaufrichtung U1,U2 des Endlosförderers 10,11 vorlaufenden Seite ein nach unten gerichteter Lagerbolzen 49 eingesetzt und verdrehfest mit dem Plattenkörper 45 verbunden. Oberhalb des Plattenkörpers 46 der als Halteebene für das Halmgut 3 wirkenden Förder- und Führungsebene C befindet sich ein mit dem Plattenkörper 46 einseitig verschraubbares Abdeckblech 50 zur Abdeckung eines beim Durchlauf des Endlosförderers 10,11 durch einen Umlenkbereich erforderlichen Freiraumes zwischen den Plattenkörpern 46 zweier benachbarter Förder- und Führungselemente 25,26. Das Abdeckblech 50 kann (Fig. 16) abgekröpft sein, so daß sich im Umlenkbereich Abdeckbleche benachbarter Förderglieder 25,26 übereinanderschieben können und insgesamt ein guter Schutz des Förderers 10,11 gegen Verschmutzung auch von oben sichergestellt ist.

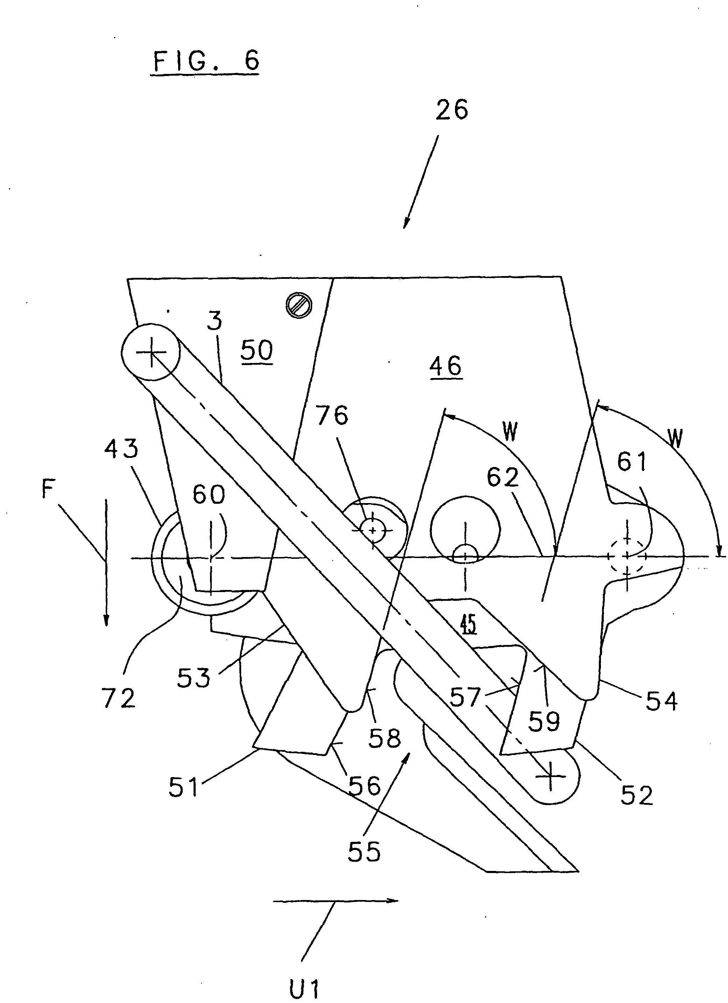

Eine besondere Bedeutung für eine störungsfreie Aufnahme und Führung des stengelartigen Erntegutes 3 in den Förder- und Führungselementen 25,26 des Endlosförderers 10,11 kommt der Form und der räumlichen Anordnung von Vorsprüngen 51,52 an den Plattenkörpern 45 in der Förder- und Führungsebene B und von Vorsprüngen 53,54 an den Plattenkörpern 46 in der Förder- und Führungsebene C zu. Bei der in Fig. 5 und 6 dargestellten Ausführungsform befindet sich zwischen den Vorsprüngen 51,52 und 53,54 ein Abstand 55 zur Aufnahme des stengelartigen Erntegutes 3 (sh. Fig. 4 und 6), wobei der Abstand 55 von den einander zugewandten Kanten 56,57,58,59 der Vorsprünge 51,52 und 53,54 begrenzt wird. Wie aus den Fig. 4 und 6 hervorgeht, wird die Frage nach einer zuverlässigen Halterung des stengelartigen Erntegutes 3 in der Lücke 55 hauptsächlich durch die Form und die Anordnung der Kanten 57,58 des Förder- und Führungselementes 25,26 beeinflußt. Deshalb weisen die den Abstand 55 begrenzenden und annähernd parallel zueinander ausgerichteten Kanten 57,58 eine solche Ausrichtung auf, bei der sie, wie in Fig. 6 dargestellt, mit einer durch endseitige Schwenkachsen 60,61 des Förder- und Führungselementes 25,26 führenden Ebene 62 einen Winkel W einschließen, der vorzugsweise in einem Winkelbereich liegt, welcher gleich oder kleiner als 90° ist. Dadurch stellt insbesondere die Kante 57 des Vorsprunges 52 ein Hindernis dar, durch welches ein unbeabsichtigtes Herausfallen des stengelartigen Erntegutes 3 aus der Lücke 55 eines Förderund Führungselementes 25,26 erschwert wird. Für die Vorsprünge 51,52 des Plattenkörpers 45 in der Förder- und Führungsebene B bietet sich als eine günstige Bauform ein, von einer Förderund Führungsebene A,B,C aus betrachtet, entgegen der Umlaufrichtung U1,U2 verschobenes Rechteck (Parallelogramm) an, während bei den Vorsprüngen 53,54 des Plattenkörpers 46 der Förder- und Führungsebene C eine in etwa dreieckförmige Bauform bevorzugt wird. In einer Weiterbildung der Erfindung besteht die Möglichkeit, dem Plattenkörper 45 in der Förder- und Führungsebene B nur einen Vorsprung 52 und dem Plattenkörper 46 in der Förder- und Führungsebene C nur einen Vorsprung 53 zuzuordnen, so daß dann eine von den Kanten 57,58 begrenzte Lücke 55 zur Aufnahme des stengelartigen Erntegutes 3 entsteht, wobei die Kanten 57,58 zumindest annähernd parallel zueinander ausgerichtet sind. Zur Verbesserung der Haltewirkung des stengelartigen Erntegutes 3 in einer Lücke 55 der Förderund Führungselemente 25,26 ist im Ausführungsbeispiel der Plattenkörper 46 der Förder- und Führungsebene B zu einem Innenbereich 63 des Endlosförderers 10,11 hin rückwärts versetzt angeordnet. Dadurch kann das stengelartige Erntegut 3 ebenfalls eine entgegen der Fahrt- und Arbeitsrichtung F leicht nach hinten geneigte Stellung einnehmen, so daß sich die Schwerpunktslage verändert und deshalb der Stengel aus Erntegut 3 fester in der Lücke 55 eingeklemmt wird. Ebenfalls entsteht mehr Freiraum, der es ermöglicht, daß noch ein weiterer Stengel von Erntegut 3 in die Lücke 55 aufgenommen werden kann. Wie aus den Figuren 5 und 6 weiterhin zu entnehmen ist, weisen die Plattenkörpern 45,46 der Förder- und Führungsebenen B,C bzw. der Haltekörper 39 und der plattenförmigen Teil 44 der Gegenschneiden 32,33 an der in Bezug zur Umlaufrichtung U1,U2 des Endlosförderers 10,11 vorlaufenden Seite kreisbogenförmige Segmente 64,65,66,67 auf, während an der in Bezug zur Umlaufrichtung U1,U2 nachlaufenden Seite kreisausschnittförmige Aussparungen 68,69,70,71 angebracht sind. Im zusammengefügten Zustand greifen diese kreisbogenförmigen Segmente 64,65,66,67 und die kreisausschnittförmigen Aussparungen 68,69,70,71 mit geringem Spiel ineinander und bewirken zum einen, daß in dem Lagergehäuse 43 untergebrachte Lagerelemente 72 mit einer wirkungsvollen Abdeckung gegen Schmutz geschützt sind, und zum anderen wird dadurch vermieden, daß an den erfindungsgemäßen Förder- und Führungselementen 25,26 durch vorstehende Kanten Störungen im Ernteablauf durch Einklemmen von Erntegutresten eintreten. Da im Bereich der Förder- und Führungsebene B eine Trennstelle vorgesehen ist, sind selbstverständlich auch die zur Herstellung einer Verbindung zwischen dem unteren Abschnitt 37 und dem oberen Abschnitt 38 erforderlichen Verbindungsplatten 40 mit entsprechenden kreisbogenförmigen Segmenten und kreisausschnittförmigen Aussparungen versehen.

Die schwenkbewegliche Verbindung 73 (Fig. 5) kommt dadurch zustande, daß ein unterer Abschnitt 37, in dessen Lagergehäuse 43 als abgedichtete, wartungsfreie Wälz- bzw. Rillenkugellager ausgebildete Lagerelemente 72 eingesetzt sind, in einen taschenförmigen Freiraum des unteren Abschnittes 37 eines nachlaufenden Förder- und Führungselementes 25,26 einführbar ist, so daß dann beim Zusammenfügen der Abschnitte 37,38 der Lagerbolzen 49 des oberen Abschnittes 38 Bohrungen 74,75 und damit gleichzeitig die Lagerelemente 72 des unteren Abschnittes des vorlaufenden Förder- und Führungselementes 25,26 durchgreift. Zur Arretierung der Abschnitte 37,38 kann eine nicht dargestellte Schraubverbindung dienen, welche in einer Bohrung 76 der Verbindungsplatte 40 und einer ebenfalls nicht dargestellten Bohrung des Plattenkörpers 45 montiert ist.

Die vorstehende Beschreibung der Förder- und Führungselemente 25,26 sowie die Vergabe der Bezugszeichen bezieht sich auf eine in Fig. 5 veranschaulichte und in Bezug zur Fahrt- und Arbeitsrichtung F an der rechten Maschinenseite des Erntegerätes 1 einsetzbare Ausführungsform. Für ein Erntegerät zum Einsatz an der linken Maschinenseite werden spiegelbildlich ausgebildete Teile mit gleichen Bezugszeichen verwendet.

Wie insbesondere aus Fig. 7 ersichtlich, befinden sich zwischen den Förder- und Führungsebenen A-B und B-C eines jeden Förder- und Führungselementes 25,26 Führungskörper 41,47, die mit einem Abstreifer 42,48 zusammenwirken. Nach der Erfindung weisen die Führungskörper 41,47 eine solche zu den Abstreifern 42,48 gerichtete Kontur 77,78 auf, daß ein annähernd bewegungsfreies (ruck- und stoßfreies) Abstreifen des stengelartigen Erntegutes 3 vom Endlosförderer 10,11 im Abgabe- und Übergabebereich 14 des Endlosförderers 10,11 an eine Verarbeitungseinrichtung S in der Art eines Häckselaggregates eines Häckslers erreicht werden kann. Dazu ist die den Abstreifern 42,48 zugewandte Kontur 77,78 beispielsweise bombiert ausgebildet, wobei die Krümmung der Kontur 77,78 bei einer Betrachtung aus einer der Förder- und Führungsebenen A,B,C der Krümmung der Bewegungsbahn des Endlosförderers 10,11 entlang einer kreisförmigen Bewegungsbahn im Abgabe- und Übergabebereich 14 geführt, so daß folglich auch die Krümmung der Kontur 77,78 kreisförmig ausgeführt ist. Wie weiterhin aus Fig. 7 hervorgeht, sind die Abstreifer 42,48 zu einem Bauteil zusammengefaßt und mittels einer Schraubverbindung 79 gegenüber einer Rahmenbaugruppe 80 der Einzugs- und Fördereinrichtung 4,5 verstellbar ausgebildet.

Die Abstreifer 42,48 sind im Zuführungsbereich 14 der Endlosförderer 10,11 beidseits und symmetrisch zu einer vertikalen Längsmittelebene des Selbstfahrers angeordnet und bilden somit seitliche Führungen für das Erntegut 3 aus, durch die dieses in die Eintrittsöffnung des Häckslers gelenkt wird. Die Abstreifer 42 und 48 überstreichen dabei den Abstand zwischen der unteren Schneidebene A, der darüberliegenden ersten Halteebene B und der oberen zweiten Halteebene C im wesentlichen vollständig. In ihrem rückwärtigen Bereich sind die Abstreifer 42,48 zu einem hochkantstehenden Flachkörper vereinigt, so daß kein Spalt zwischen diesen verbleibt. Erst im vorderen Bereich, in dem die Abstreifer 42,48 an der Vorderfläche 77,78 der Endlosförderer 10,11 angreifen, ist eine Horizontalteilung der Abstreifer 42,48 vorgesehen, um damit den Durchtritt des die untere Halteebene B bildenden Plattenkörpers 45 mit seinen Vorsprüngen 51 und 52 zwischen den Abstreifern 42 und 48 zu ermöglichen.

Die in Fahrtrichtung F vorderen, hochkantstehenden Kantenbereiche der Abstreifer 42,48 sind in dichtem Abstand vor den Abweiseschilden 41,47 angeordnet, so daß diese von den Abstreifern
vollständig geräumt werden. Aufgrund der bombierten Vorderflächen und der dadurch ermöglichten knickfreien Kreisbahn, die die Abweiseschilde 41,47 im Zuführungsbereich 14, in dem diese über einem Umlenkrad bewegt werden, ausbilden, kann der Abstand der vorderen Kanten der Abstreifer 42,48 zu den Abweiseschilden 41,47 konstant gehalten werden. Der Abstand zwischen den Vorderkanten und den Abweiseschilden 41,47 bleibt gleich. Auch wenn die Förderglieder im Umlenkbereich entgegen der Fahrtrichtung geradlinig geführt würden, wäre mit einer dann ausgebildeten planebenen Oberfläche der Abweiseschilde 41,47 eine Konstanthaltung des Abstands zwischen diesen und den Abstreifern 42,48 möglich. Um bessere Abstreifeigenschaften zu erreichen, können die Abstreifer 42,48 federnd gelagert sein. Die Abstreifer 42,48 können in Funktionsstellung arretiert sein. Um eine Wartung zu ermöglichen, muß die Arretierung gelöst werden. Die Abstreifer 42,48 können dann aus der Funktionsstellung herausgeschwenkt werden und beispielsweise vollständig gereinigt werden.

An Stelle einer Arretierung ist auch möglich, die Abstreifer derart federnd zu lagern, daß ein Abklappen der Abstreifer zu Wartungszwecken gegen die Kraft der Feder ermöglicht ist. Die Abstreifer 42,48 bestehen beispielsweise aus Federstahl.

Bei der Häckselarbeit auf dem Feld wird das Erntegerät 1 als Vorsatzgerät 2 für eine Verarbeitungseinrichtung S in der Art eines insbesondere als selbstfahrende Arbeitsmaschine ausgebildeten Häckslers im Ausführungsbeispiel mit jeweils links und rechts von der Mitte des Häckslers im Ausführungsbeispiel mit jeweils links und rechts von der Mitte des Häckslers angeordneten Einzugs- und Fördereinrichtungen in einer bodennahen Arbeits- und Betriebsstellung (sh. Fig. 1) und/oder durch Schleifkufen oder dergleichen gegenüber dem Erdboden zumindest teilweise abgestützt gefahren. In Fahrt- und Arbeitsrichtung F gesehen sind die einzelnen Endlosförderer 10,11 etwas schräg gestellt, so daß ihre oberen tischförmigen Abdeckungen von vorn unten nach hinten oben zeigen. Die zwei jeweils am äußeren Ende angebrachten Halm- und Pflanzenteiler begrenzen die maximale Arbeitsbreite des Erntegerätes 1. Der Endlosförderer 10,11 einer jeden Einzugs- und Fördereinrichtung 4,5 bewegt sich mit einer der Fahrgeschwindigkeit in Umlaufrichtung U1,U2. Dabei wird von den als hakenförmige Gegenschneiden 32,33 ausgebildeten Mitnehmern 31 des Endlosförderers 10,11 stengelartiges Erntegut 3 erfaßt und durch das Zusammenwirken der Gegenschneiden 32,33 mit dem unterhalb des Endlosförderers 10,11 befindlichen Schneidmessers 34 abgeschnitten und sodann von der Lücke 55 zwischen den Vorsprüngen 51,52 und 53,54 der Förder- und Führungselemente 25,26 aufgenommen. Das stengelartige Erntegut 3 befindet sich dann entsprechend den Darstellungen in den Fig. 4 und 6 in einer entgegen der Umlaufrichtung U1,U2 und einer entgegen der Fahrtund Arbeitsstellung F leicht geneigten Schrägstellung und wird in dieser Stellung quer zur Fahrt- und Arbeitsrichtung F bis in einen Abgabe- und Übergabebereich 14 der Einzugs- und Fördereinrichtung 4,5 gefördert. Über dort angebrachte Abstreifer 42,48 wird das stengelartige Erntegut 3 aus den Lücken 55 der Förder- und Führungselemente 25,26 herausgelöst und kann somit von einer nachfolgenden Verarbeitungseinrichtung in der Art eines Häckselaggregates des Häckslers aufgenommen und gehäckselt werden.

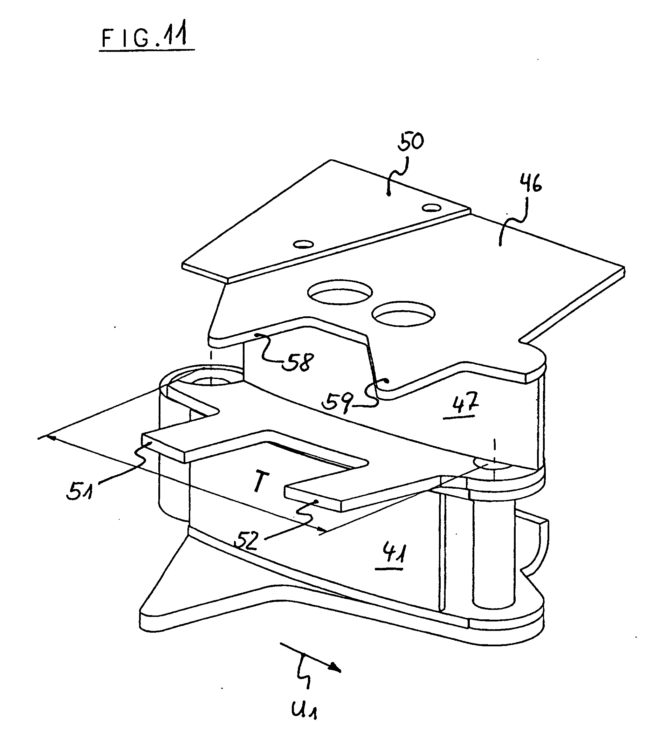

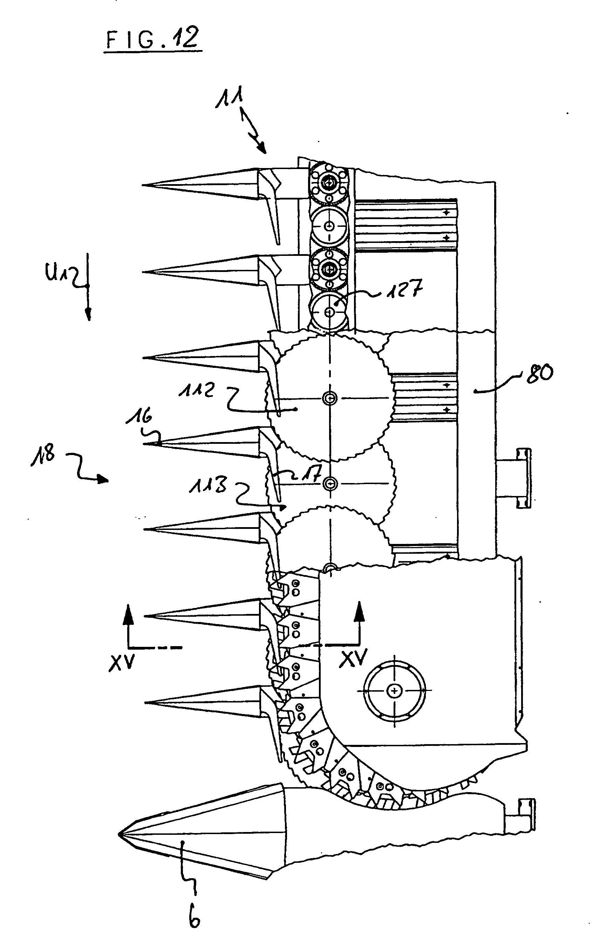

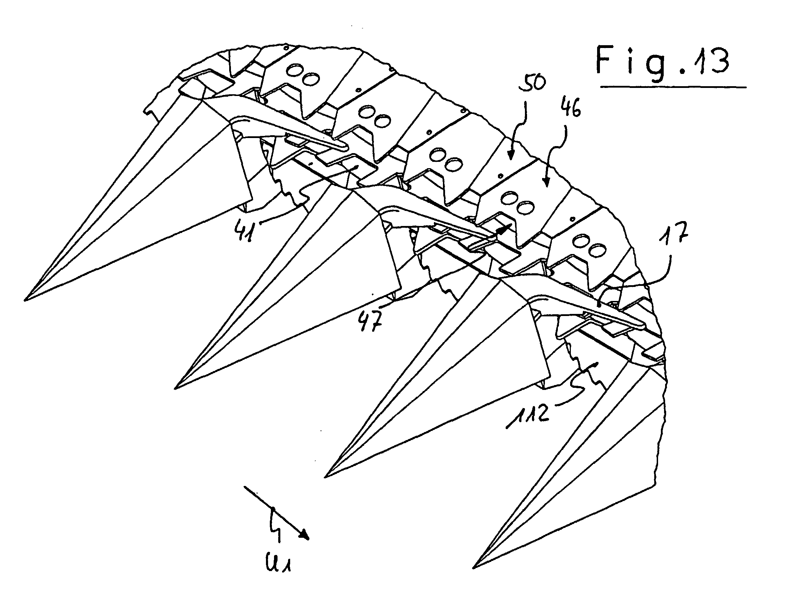

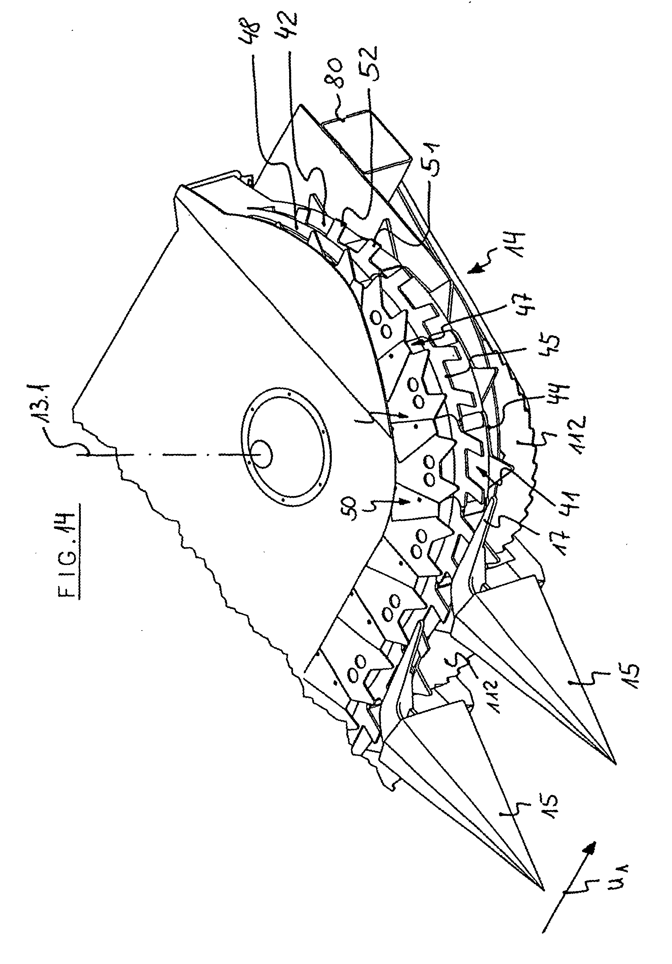

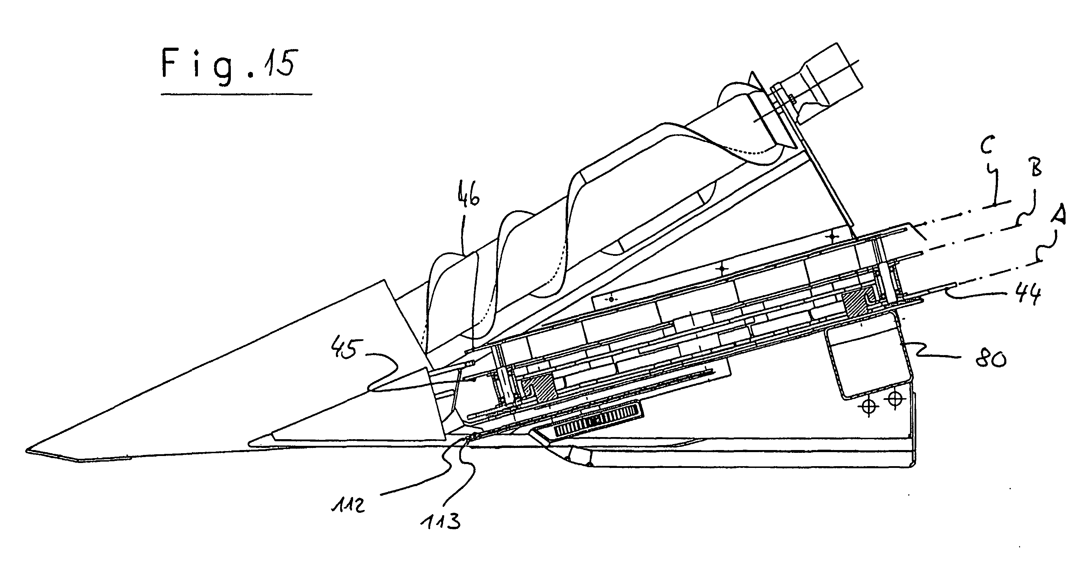

In einem alternativen Ausführungsbeispiel (Fig. 11 bis Fig. 15) sind unterhalb der Umlaufebene der Förderer 10,11 bewegliche Schneidmesser angeordnet, die im Ausführungsbeispiel als rotierbare Scheiben 112,113 ausgebildet sind. Die Scheiben 112,113 sind an den Rahmen 80, gegenüber denen die Endlosförderer 10,11 beweglich sind, ortsfest gelagert. An Stelle von rotierbaren Scheiben kommen auch translatorisch gegeneinander hin und her bewegliche lineare Messer in Betracht. Die rotierbaren Scheiben 112,113 können bis in den Zuführungsbereich 14, in dem zur Eintrittsöffnung hin gefördert wird, angeordnet sein. Damit sind auch für Halme im Bereich der vertikalen Längsmittelebene des Fahrzeugs noch gleich gute Schnittbedingungen geschaffen.

Die rotierbaren Scheiben 112,113 liegen parallel zur Umlaufebene der Fördereinrichtung 4,5 und sind unmittelbar unterhalb von dieser an den Rahmen 80 angeordnet. Die rotierbaren Scheiben 112,113 sind dabei gegeneinander unter Höhenversatz überlappend gelagert, wobei die Scheiben 112 in einer oberen und die Scheiben 113 in einer unteren Ebene gehalten sind. Die wirksamen Schneidbereiche bilden damit nur einen kleinen Sektor der rotierbaren Scheiben 112,113 aus, so daß in Draufsicht die jeweils wirksamen Schneidbereiche nur eine gewellte Linie zeigen. Damit ist eine Annäherung an eine geradlinige Schneidvorrichtung erreicht. Der Antrieb der Scheiben 112,113 erfolgt über miteinander verzahnte Antriebsräder 127, die unterhalb der rotierbaren Scheiben 112,113 gehalten und dem jeweiligen Rahmen 80 zugeordnet sind. Im Randbereich können die Zahnräder 127 ebenfalls über Umlenkräder, die auch die Endlosförderer 10,11 antreiben, über eine entsprechende Drehzahlübersetzung angetrieben werden. Es ist auch möglich, die Antriebe für die Endlosförderer 10,11 und für die rotierenden Scheiben 112,113 vollständig zu entkoppeln. In jedem Fall ist aufgrund der Anordnung in getrennten Ebenen eine bauliche Entkopplung erreicht, so daß ohne Arbeiten an den Endlosförderern 10,11 die Schneidmesser 112,113 ausgewechselt werden können.

Die Schneidmesser 112,113 können mit hoher Umlaufgeschwindigkeit bewegt werden und im freien Schnitt die Halme 3 schneiden. Auch ist ein Zusammenwirken mit zusätzlichen Schneidmitteln, die in einer unteren, den Schneidmessern 112,113 benachbarten Ebene der Fördereinrichtung 4,5 befindlich sein können, möglich.

In einem verbesserten Ausführungsbeispiel (Fig. 16, Fig. 17) ist ein weiterer Mitnehmer 131 vorgesehen, der dicht oberhalb des Mitnehmers 31 der Schneidebene A angeordnet ist und mit seiner in Umlaufrichtung vorderen Kante im wesentlichen fluchtend über der in Umlaufrichtung vorderen Kante des Mitnehmers 31 steht.

Zwischen den genannten Mitnehmern 31 und 131 befindet sich im Zuführungsbereich 14 eine fest angeordnete Gegenschneide 132 (Fig. 18), die in dichtem Abstand von den Mitnehmern 31 und 131 unter- bzw. überlaufen wird. Dabei kommt es zu einer Zerschneidung von den Mitnehmern 31 und 131 anhaftenden Pflanzenteilen, insbesondere Fasern von beispielsweise welken Blättern. Auf diese Weise ist verhindert, daß derartige Fasern sich um die Mitnehmer 31,131 wickeln und dann die Schneid- und Führungsfähigkeit derartiger Mitnehmer einschränken. Der Mitnehmer 131 kann einwärts weisende Fortsätze 133 aufweisen, mit denen er in Ausnehmungen des Abweiseschildes 41 gehalten und rückseitig mit diesem verschweißt ist, so daß die Vorderseite exakt plattenförmig und planeben und im Übergang zu dem Abweiseschild 41 rechtwinklig stehend ausgeführt werden kann, was sehr geringe Abstände zu der festen Gegenschneide 132 und dem Abstreifer 42 ermöglicht.

## Patentansprüche

1. Erntegerät (1) zum Ernten von Mais oder dergleichen stengelartigem Erntegut, wobei das Erntegerät zumindest einen umlaufenden Endlosförderer (10;11) für aufgenommenes Erntegut umfaßt, der endseitig einen Zuführungsbereich (14) des Ernteguts zu einer Eintrittsöffnung einer Weiterverarbeitungseinrichtung, insbesondere eines Häckslers, ausbildet, wobei der Endlosförderer gelenkig aneinander gehaltene Förderglieder (25;26) umfaßt und zumindest eine untere, auswärts weisende Schneidmittel umfassende Schneidebene (A) und zumindest eine darüberliegende, auswärts weisende Haltemittel umfassende Halteebene (B;C) für die Ernteguthalme aufweist, **dadurch gekennzeichnet, daß** eine den Schneid- und Haltemitteln zugewandte Vorderseite (77;78) des Endlosförderers (10;11) im wesentlichen geschlossen ausgebildet ist.

2. Erntegerät nach Anspruch 1, **dadurch gekennzeichnet, daß** der Endlosförderer (10;11) eine untere Schneidebene (A) und zwei darüberliegende, jeweils mit Haltemitteln für das Halmgut versehene Halteebenen (B;C) aufweist.

3. Erntegerät nach einem der Ansprüche 1 oder 2, **dadurch gekennzeichnet, daß** die Haltemittel (53;54) der oberen Halteebene (C) gegenüber den Haltemitteln (51;52) der unteren Halteebene (B) im Bereich des Arbeitstrums des Endlosförderers (10;11) entgegen der Fahrtrichtung (F) versetzt sind.

4. Erntegerät nach einem der Ansprüche 1 bis 3, **dadurch gekennzeichnet, daß** die Förderglieder (25;26) des Endlosförderers (10;11) jeweils einstückig oder durch fest miteinander verbundene Teile gebildet sind.

5. Erntegerät nach einem der Ansprüche 1 bis 4, **dadurch gekennzeichnet, daß** zur Bildung der geschlossenen Vorderfläche der jeweiligen Förderglieder (25;26) ein einen Bestandteil des Förderglieds (25;26) ausbildender erster Abweiseschild (41) zwischen der Schneidebene (A) und der ersten Halteebene (B) und ein zweiter Abweiseschild (47) zwischen der ersten (B) und der zweiten Halteebene (C) vorgesehen sind.

6. Erntegerät nach Anspruch 5, **dadurch gekennzeichnet, daß** die Abweiseschilde (41;47) sich zwischen Gelenkachsen (60;61) der jeweiligen Förderglieder erstrecken.

7. Erntegerät nach einem der Ansprüche 5 oder 6, **dadurch gekennzeichnet, daß** die Abweiseschilde (41;47) eine bombierte Form haben und die Abweiseschilde (41;47) benachbarter Förderglieder (25;26) im Zuführungsbereich (14), in dem eine Umlenkung des Endlosförderers (10;11) erfolgt, eine in Draufsicht im wesentlichen geschlossene, knickfreie Bahnkurve ausbilden.

8. Erntegerät nach einem der Ansprüche 1 bis 7, **dadurch gekennzeichnet, daß** der Endlosförderer (10;11) in einem Rahmen gehalten ist, wobei dem Rahmen ein Schneidmesser (34) zugeordnet ist, gegenüber dem der Endlosförderer (10;11) relativbeweglich ist.

9. Erntegerät nach Anspruch 8, **dadurch gekennzeichnet. daß** der Endlosförderer (10;11) in seiner Schneidebene (A) einen unteren Mitnehmer (32;33) aufweist, der als Gegenschneide mit dem Schneidmesser (34) zusammenwirkt.

10. Erntegerät nach einem der Ansprüche 1 bis 9, **dadurch gekennzeichnet, daß** der geschlossenen Vorderfläche des Endlosförderers (10;11) zumindest ein Abstreifer (42;48) zugeordnet ist, gegenüber dem der Endlosförderer relativbeweglich ist.

11. Erntegerät nach Anspruch 10, **dadurch gekennzeichnet, daß** der oder die Abstreifer (42;48) im Zuführungsbereich (14) des Endlosförderers (10;11) angeordnet ist oder sind.

12. Erntegerät nach einem der Ansprüche 10 oder 11, **dadurch gekennzeichnet, daß** der oder die Abstreifer (42;48) als im wesentlichen hochkant stehende, starre Körper ausgebildet sind, die jeweils zwischen zwei Schneid- und/oder Halteebenen (A;B;C) des Endlosförderers angeordnet sind.

13. Erntegerät nach einem der Ansprüche 10 bis 12, **dadurch gekennzeichnet, daß** der oder die Abstreifer (42;48) den Abstand zwischen einer Schneid- (A) und einer Halteebene (B) und/oder zwischen zwei Halteebenen (B;C) im wesentlichen vollständig überstreichen.

14. Erntegerät nach einem der Ansprüche 10 bis 13, **dadurch gekennzeichnet, daß** der Abstreifer (42;48) im Bereich der Zuführung (14) gehalten ist und sich mit seinem freien Ende sich im wesentlichen in Fahrtrichtung (F) vorwärts erstreckt und in den gekrümmten Umlenkungsbereich des Endlosförderers (10;11) eingreift.

15. Erntegerät nach Anspruch 14, **dadurch gekennzeichnet, daß** Abstreifer (42;48) beidseits einer Eintrittsöffnung für ein Weiterverarbeitungsgerät angeordnet sind und seitliche Führungsflächen für das Erntegut bilden.

16. Erntegerät nach einem der Ansprüche 10 bis 15, **dadurch gekennzeichnet, daß** die Abstreifer (42;48) für zwei übereinanderllegende Abweiseschilde (41;47) zu einem Bauteil zusammengefaßt sind.

17. Erntegerät nach einem der Ansprüche 10 bis 16, **dadurch gekennzeichnet, daß** die Abstreifer (42;48) aus Federstahl bestehen.

18. Erntegerät nach einem der Ansprüche 10 bis 17, **dadurch gekennzeichnet, daß** die Abstreifer (42;48) durch federnde Lagerung nachgiebig abgestützt sind.

19. Erntegerät nach einem der Ansprüche 1 bis 18, **dadurch gekennzeichnet, daß** eine erste Halteebene (B) des Endlosförderers dadurch gebildet ist, daß jedes Förderglied (10;11) in der Halteebene (B) zumindest einen Mitnehmer (51;52) aufweist, der Teil eines in der Förder- und Führungsebene liegenden Plattenkörpers (45) ist, wobei der Plattenkörper (45) wenigstens einen quer zur Umlaufrichtung (U1;U2) des Endlosförderers (10;11) nach außen abstehenden Vorsprung aufweist, der den Mitnehmer (51;52) ausbildet.

20. Erntegerät nach einem der Ansprüche 1 bis 19, **dadurch gekennzeichnet, daß** eine zweite Halteebene (C) des Endlosförderers (10;11) dadurch gebildet ist, daß jedes Förderglied (25;26) in der Halteebene (C) zumindest einen Mitnehmer (53;54) aufweist, der Teil eines in der Förder- und Führungsebene liegenden Plattenkörpers (46) ist, wobei der Plattenkörper (46) wenigstens einen quer zur Umlaufrichtung (U1;U2) des Endlosförderers (10;11) nach außen abstehenden Vorsprung aufweist. der den Mitnehmer (53;54) ausbildet.

21. Erntegerät nach einem der Ansprüche 19 oder 20, **dadurch gekennzeichnet, daß** ein Plattenkörper (45;46) zwei nach vorne abstehende Vorsprünge (51,52:53,54) aufweist.

22. Erntegerät nach Anspruch 21, **dadurch gekennzeichnet, daß** zwischen den Vorsprüngen (51,52;53,54) eines jeden Plattenkörpers (45;46) und den Vorsprüngen (52,51;54,53) eines jeweils in derselben Ebene (B;C) liegenden benachbarten Plattenkörpers (45;46) annähernd gleich große Abstände gebildet sind.

23. Erntegerät nach einem der Ansprüche 19 bis 22, **dadurch gekennzeichnet, daß** die Plattenkörper (45;46) der Halteebenen (B;C) jeweils zwei Vorsprünge (51,52) und (53,54) aufweisen.

24. Erntegerät nach einem der Ansprüche 19 bis 23, **dadurch gekennzeichnet, daß** die Vorsprünge (51;52) zumindest einer Halteebene (45) als parallelogrammartig erstreckte Flachkörper ausgebildet sind.

25. Erntegerät nach einem der Ansprüche 19 bis 24, **dadurch gekennzeichnet,** däß Vorsprünge (53;54) sich entgegen der Fahrtrichtung (F) erweitern und somit der Abstand (55) zwischen den Vorsprüngen (53;54) im Bereich des Arbeitstrums (18) entgegen der Fahrtrichtung (F) abnimmt.

26. Erntegerät nach einem der Ansprüche 19 bis 25, **dadurch gekennzeichnet, daß** in einer unteren Halteebene (B) im wesentlichen parallelogrammförmige (51;52) und in einer oberen Halteebene (C) dreiecksförmige Vorsprünge (53;54) der Plattenkörper (45;46) ausgebildet sind und die abgemähten Halme (3) in dem spitzen Winkel (W) zwischen dem parallelogrammförmigen Vorsprung (51;52) und der Vorderkante (45a) des Plattenkörpers (45) einerseits und andererseits in dem Winkel zwischen dem dreieckförmigen Vorsprung (53;54) und der Vorderkante (46a) des Plattenkörpers (46) der oberen Halteebene (C) halterbar ist.

27. Erntegerät nach Anspruch 26, **dadurch gekennzeichnet, daß** der durch die als Halteteile wirkenden Vorsprünge (51,52;53,54) der genannten Halteebenen (B;C) gebildete Aufnahmeraum (55) für die abgemähten Halme (3) sich entgegen der Fahrtrichtung (F) verengt.

28. Erntegerät nach einem der Ansprüche 19 bis 27, **dadurch gekennzeichnet, daß** die Vorderkante (45a;46a) der Plattenkörper (45;46) zwischen den Vorsprüngen (51,52;53,54) im wesentlichen kreisbogenförmig ausgebildet ist.

29. Erntegerät nach einem der Ansprüche 19 bis 28, **dadurch aekennzeichnet,** daß die Plattenkörper (45;46) jeweils parallel zur Umlaufrichtung (U1;U2) einenends eine im wesentlichen kreisbogenförmige Erweiterung (64;65) und anderenends eine komplementäre Ausnehmung (68;69) aufweisen, wobei Plattenkörper (45;46) benachbarter Förderglieder (25;26) im zusammengesetzten Zustand mit geringem Spiel ineinandergreifen.

30. Erntegerät nach einem der vorhergehenden Ansprüche, **dadurch gekennzeichnet, daß** ein den als Gegenschneide ausgebildeten Mitnehmer (31) tragender Plattenkörper (44) parallel zur Umlaufrichtung (U1;U2) ebenfalls einenends ein kreisbogenförmiges Segment (66;67) und anderenends eine komplementäre Ausnehmung (70) aufweist und benachbarte Plattenkörper (44) mit geringem Spiel ineinandergreifen.

31. Erntegerät nach einem der vorhergehenden Ansprüche, **dadurch gekennzeichnet. daß** die Krümmung der Abweiseschilde (41;47) ebenso wie die Krümmung der Vorderkante (44a;45a;46a) der Plattenkörper (44;45;46) kreisbogenförmig (64) ausgebildet ist.

32. Erntegerät nach Anspruch 28, **dadurch gekennzeichnet, daß** der Krümmungsradius dem Radius eines nahe dem Zuführungsbereich (14) des Endlosförderers (10;11) an die Verarbeitungseinrichtung angeordneten Umlenk- oder Antriebsrades im wesentlichen entspricht.

33. Erntegerät nach einem der Ansprüche 1 bis 30, **dadurch gekennzeichnet, daß** jedes Förderglied (25;26) des Endlosförderers (10;11) aus zwei Abschnitten (37;38) zusammensetz- und arretierbar ist.

34. Erntegerät nach einem der Ansprüche 1 bis 33, **dadurch gekennzeichnet, daß** benachbarte Förderglieder (25;26) eine schwenkbeweglich ausgebildete Verbindung (73) aufweisen.

35. Erntegerät nach Anspruch 34, **dadurch gekennzeichnet, daß** die schwenkbewegliche Verbindung (73) zwischen benachbarten Fördergliedern (25;26) über einen dem oberen Abschnitt (38) zugeordneten Lagerbolzen (49) und ein den Lagerbolzen aufnehmendes Lagerauge (43) des unteren Abschnitts (37) eines benachbarten Förderglieds (25;26) herstellbar ist.

36. Erntegerät nach Anspruch 35, **dadurch gekennzeichnet, daß** als Lagerungen (72) der schwenkbeweglichen Verbindungen (73) abgedichtete Wälzlager oder Rillenkugellager vorgesehen sind.

37. Erntegerät nach einem der Ansprüche 1 bis 36, **dadurch gekennzeichnet, daß** die kreisbogenförmigen Segmente (64;66;67) der Plattenkörper (44;45;46) eine Abdeckung der Lagerungen (72) bilden.

38. Erntegerät nach einem der Ansprüche 33 bis 37, **dadurch gekennzeichnet, daß** die Abschnitte (37;38) eines Förderglieds (25;26) miteinander verschraubt sind.

39. Erntegerät nach einem der Ansprüche 33 bis 38, **dadurch gekennzeichnet, daß** der obere Abschnitt (38) die Plattenkörper (45;46) mit den die Halteebenen bildenden Vorsprüngen (51;52;53;54) und dem dazwischenliegenden Abweiseschild (47) umfaßt.

40. Erntegerät nach einem der Ansprüche 33 bis 39, **dadurch gekennzeichnet, daß** der untere Abschnitt (37) die als Mitnehmer ausgebildeten Gegenschneiden (31) und einen weiteren Abweiseschild (41) umfaßt.

41. Erntegerät nach einem der Ansprüche 1 bis 40, **dadurch gekennzeichnet, daß** der Endlosförderer (10;11) an den Fördergliedern (25;26) Ansätze zum Angreifen eines Antriebs aufweist.

42. Erntegerät nach Anspruch 41, **dadurch gekennzeichnet, daß** die Ansätze von das Lagerauge ausbildenden Hülsenkörpern (43) gebildet sind.

43. Erntegerät nach Anspruch 42, **dadurch gekennzeichnet, daß** zum Antrieb des Endlosförderers (10;11) zumindest zwei einander gegenüberliegende Umlenkräder vorgesehen sind, die an den Ansätzen (43) angreifen und den Umlauf der Förderglieder (25;26) bewirken.

44. Erntegerät nach Anspruch 43, **dadurch gekennzeichnet, daß** ein Antriebsrad des Endlosförderers dem Zuführungsbereich (14) zugeordnet ist und im Bereich der Zuführung (14) an die Weiterverarbeitungseinrichtung eine Umlenkung des Endlosförderers (10;11) erfolgt.

45. Erntegerät nach einem der Ansprüche 1 bis 44, **dadurch gekennzeichnet, daß** im Bereich des Antriebsrades des Endlosförderers (10;11) um die Drehachse (12.1;13.1) rotierend antreibbare Zusatzförderer anbringbar sind,

46. Erntegerät nach einem der Ansprüche 1 bis 45, **dadurch gekennzeichnet, daß** die Förderglieder (25;26) des Endlosförderers (10;11) bei ihrer Bewegung zwischen den Antriebs- und Umlenkrädern geführt sind.

47. Erntegerät nach einem der Ansprüche 1 bis 46, **dadurch gekennzeichnet, daß** die Förderglieder (25;26) rückseitig mit einem parallel zur Umlaufrichtung (U1;U2) ausgerichteten und in eine entsprechende Ausnehmung (30;130) einer Führungsleiste (28;128) eingreifenden Eingriffsmittel (29;129) versehen sind.

48. Erntegerät nach Anspruch 47, **dadurch gekennzeichnet, daß** das Eingriffsmittel (129) durch einen aufwärts gerichteten Zapfen gebildet ist, der ein Gleit- oder Wälzlager zu seiner Führung in der Ausnehmung (130) aufweist.

49. Erntegerät nach einem der Ansprüche 1 bis 48, **dadurch gekennzeichnet, daß** zwei seitwärts auswärts weisende und im wesentlichen im Betrieb fluchtend nebeneinanderliegende Endlosförderer (10;11) vorgesehen sind.

50. Erntegerät nach einem der Ansprüche 1 bis 49, **dadurch gekennzeichnet, daß** jedem Rahmen, der den Endlosförderer trägt, Blatt- und Pflanzenheber (15) zugeordnet sind und dieser jeweils eine pyramidenförmige Teilerspitze (16) umfaßt.

51. Erntegerät nach Anspruch 50, **dadurch gekennzeichnet, daß** jeder Teilerspitze (16) ein Führungsbügel (17) zugeordnet ist, der einen im wesentlichen in Förderrichtung (U1;U2) weisenden Ausleger umfaßt.

52. Erntegerät nach Anspruch 51, **dadurch gekennzeichnet, daß** sich der Ausleger bis an den nächsten Blatt- und Pflanzenheber (15) heranerstreckt.

53. Erntegerät nach einem der Ansprüche 51 oder 52, **dadurch gekennzeichnet, daß** der Führungsbügel (17) federnd gelagert ist.

54. Erntegerät nach Anspruch 53, **dadurch gekennzeichnet. daß** durch die Federkraft der Führungsbügel (17) zur Ausbildung eines zwischen diesem und dem Arbeitstrum (18) des Endlosförderers (10;11) gebildeten Förderkanals für das Halmgut (3) entgegen der Fahrtrichtung (F) vorgespannt ist.

55. Erntegerät nach einem der Ansprüche 1 bis 54, **dadurch gekennzeichnet, daß** unterhalb der Endlosförderer bewegliche, von den Endlosförderern getrennte Schneidmesser (112;113) angeordnet sind.

56. Erntegerät nach Anspruch 55, **dadurch gekennzeichnet, daß** die beweglichen Schneidmesser (112;113) als rotierbare Scheiben ausgebildet und in einer unmittelbar unterhalb der Bewegungsebene der Endlosförderer und parallel zu deren Bewegungsbahn befindlichen Ebene angeordnet sind.

57. Erntegerät nach Anspruch 56, **dadurch gekennzeichnet, daß** die Endlosförderer mit ihrem Arbeitstrum einen quer zur Fahrtrichtung (F) verlaufenden Förderbereich überstreichen und die rotierenden Schneidmesser (112;113) nebeneinander gestaffelt unterhalb dieses Förderbereichs angeordnet sind.

58. Erntegerät nach einem der Ansprüche 55 bis 57, **dadurch gekennzeichnet, daß** die Förderglieder in einer unteren Ebene mit den rotierbaren Schneidmesser (112;113) zusammenwirkende Schneidmittel aufweisen.

59. Erntegerät nach einem der Ansprüche 55 bis 57, **dadurch gekennzeichnet, daß** die rotierbaren Schneidmesser (112;113) das Erntegut (3) im freien Schnitt abschneiden.

60. Erntegerät nach einem der Ansprüche 55 bis 59, **dadurch gekennzeichnet, daß** die rotierbaren Schneidmesser (112;113) gegenüber die Endlosförderer (10;11) haltenden Rahmen (110;111) ortsfest gelagert sind.

61. Erntegerät nach Anspruch 60, **dadurch gekennzeichnet, daß** die rotierbaren Schneidmesser (112;113) in zwei Ebenen verlaufen und gegeneinander unter Höhenversatz überlappend gelagert sind.

62. Erntegerät nach einem der Ansprüche 1 bis 61, **dadurch gekennzeichnet, daß** im Bereich der Zuführung (14) eine feste Gegenschneide (132) vorgesehen ist, die im Betrieb von dem Mitnehmer (31) der Schneidebene (A) in dichtem Abstand unterund von einem parallel über dem Mitnehmer (31) liegenden weiteren Mitnehmer (131) in dichtem Abstand überlaufen wird.

63. Erntegerät nach Anspruch 61, **dadurch gekennzeichnet, daß** der obere Mitnehmer (131) mittels den Abweiseschild (41) durchgreifenden und rückseitig befestigten Vorsprüngen (133) an den Fördergliedern (25;26) der Förderer (10,11) festgelegt ist.

## Claims

1. Harvesting equipment (I) for harvesting corn or similar stalk crops; with the harvesting equipment having at least one rotary endless conveyor (10; 11) for harvested crop, forming at the end part a supply zone (14) for the crop to an inlet of a processing device, particularly a chopper, with the endless conveyor comprising chain links (25; 26) articulated to one another and at least one lower cutting plane (A) comprising an outwards oriented cutting means and at least one upper retaining plane (B; C) comprising outwards oriented retaining means for the harvested crop stalks, **characterised in that** a front face (77; 78) of the endless conveyor (10; 11) facing towards the cutting and retaining means is designed to be substantially enclosed.

2. Harvesting equipment in accordance with claim 1, **characterised in that** the endless conveyor (10; 11) has a lower cutting plane (A) and two retaining planes (B; C), each with retaining means for the stalk crop, above this.

3. Harvesting equipment in accordance with one of claims 1 or 2, **characterised in that** the retaining means (53; 54) of the upper retaining plane (C) is offset in the direction of travel (F) in the area of the working section of the endless conveyor (10; 11) relative to the retaining means (51; 52) of the lower retaining plane (B).

4. Harvesting equipment in accordance with one of claims 1 to 3, **characterised in that** the transporting chain links (25; 26) of the endless conveyor (10; 11) are each formed of one piece or of parts permanently connected to each other.

5. Harvesting equipment in accordance with one of claims 1 to 4, **characterised in that** to form the enclosed front face of the particular transporting chain links (25; 26) a first deflector (41), forming part of the transport chain link (25; 26) is provided between the cutting plane (A) and the first retaining plane (B), and a second deflector (47) is provided between the first (B) and second (C) retaining plane.

6. Harvesting equipment in accordance claim 5, **characterised in that** the deflectors (41; 47) extend between pivot axes (60; 61) of the respective transport chain links.

7. Harvesting equipment in accordance with one of claims 5 or 6, **characterised in that** the deflectors (41; 47) have a domed shape and the deflectors (41; 47) of adjacent transport chain links (25; 26), when viewed in plan view, form a substantially closed kink-free track curve in the supply zone (14) in which a deflection of the endless conveyor (10; 11) takes place.

8. Harvesting equipment in accordance with one of claims 1 to 7, **characterised in that** the endless conveyor (10; 11) is held in a frame, with a cutting blade (34) being assigned to the frame, with respect to which the endless conveyor (10; 11) has a relative movement.

9. Harvesting equipment in accordance with claim 8, **characterised in that** the endless conveyor (10; 11) has a lower carrier (32; 33) in its cutting plane (A) that interacts as a counterblade with the cutting blade (34).

10. Harvesting equipment in accordance with one of claims 1 to 9, **characterised in that** at least one scraper (42; 48) is assigned to the enclosed front face of the endless conveyor (10; 11) and can move relative to the endless conveyor.

11. Harvesting equipment in accordance with claim 10, **characterised in that** the scraper (or scrapers) (42; 48) is arranged in the supply zone (14) of the endless conveyor (10; 11).

12. Harvesting equipment in accordance with one of claims 10 or 11, **characterised in that** the scraper (or scrapers) (42; 48) is designed as a rigid body, essentially standing on end, that in each case is arranged between two cutting and/or retaining planes (A; B; C) of the endless conveyor.

13. Harvesting equipment in accordance with one of claims 10 to 12, **characterised in that** the scraper (or scrapers) (42; 48) essentially completely extends between one cutting (A) and one retaining plane (B) and/or between two retaining planes (B; C).

14. Harvesting equipment in accordance with one of claims 10 to 13, **characterised in that** the scraper (42; 48) is held in the area of the supply zone (14) and extends forwards with its free end in a direction that is mainly the direction of travel (F) and engages in the curved deflection area of the endless conveyor (10; 11).

15. Harvesting equipment in accordance with claim 14, **characterised in that** scrapers (42; 48) are arranged on both sides of the inlet for a processing device and form side guidance surfaces for the plants.

16. Harvesting equipment in accordance with one of claims 10 to 15, **characterised in that** the scrapers (42; 48) are assembled to form one component for two deflectors (41; 47) lying one above the other.

17. Harvesting equipment in accordance with one of claims 10 to 16, **characterised in that** the scrapers (42; 48) are made of spring steel.

18. Harvesting equipment in accordance with one of claims 10 to 17, **characterised in that** the scrapers (42; 48) are flexibly supported by resilient mountings.

19. Harvesting equipment in accordance with one of claims 1 to 18, **characterised in that** a first retaining plane (B) of the endless conveyor is formed **in that** each transport chain link (10; 11) has at least one carrier (51; 52) in the retaining plane (B) that is part of a plate body (45) lying in the transport and guide plane, with the plate body (45) having at least one outwards directed projection transverse to the direction of rotation (U1; U2) of the endless conveyor (10; 11), that forms the carrier (51; 52).

20. Harvesting equipment in accordance with one of claims 1 to 19, **characterised in that** a second retaining plane (C) of the endless conveyor (10; 11) is formed in such a way that each transporting chain link (25; 26) has at least one carrier (53; 54) in the retaining plane, that is part of a plate body (46) lying in the conveying and guiding plane, with the plate body (46) having at least one outwards-oriented projection transverse to the direction of rotation (U1; U2) of the endless conveyor (10; 11), that forms the carrier (53; 54).

21. Harvesting equipment in accordance with one of claims 19 or 20, **characterised in that** a plate body (45; 46) has two forwards-oriented projections (51, 52; 53, 54).

22. Harvesting equipment in accordance with claim 21, **characterised in that** approximately equal clearances are formed between the projections (51, 52; 53, 54) of each of the plate bodies (45; 46) and the projections (52, 51; 54, 53) of each of the respective adjacent plate bodies (45; 46) lying in the same plane (B; C).

23. Harvesting equipment in accordance with one of claims 19 to 22, **characterised in that** the plate bodies (45; 46) of the retaining planes (B; C) each have two projections (51, 52) and (53, 54).

24. Harvesting equipment in accordance with one of claims 19 to 23, **characterised in that** the projections (51; 52) of at least one retaining plane (45) are formed as parallelogram-type extended flat bodies.

25. Harvesting equipment in accordance with one of claims 19 to 24, **characterised in that** the projections (53; 54) extend against the direction of travel (F) and the clearance (55) between the projections (53; 54) in the area of the working section (18) thus reduces against the direction of travel (F).

26. Harvesting equipment in accordance with one of claims 19 to 25, **characterised in that** mainly parallelogram-shaped (51; 52) projections (53; 54) of the plate bodies (45; 46) are formed in a lower retaining plane (B) and triangular-shaped projections (53; 54) of the plate bodies (45; 46) in an upper retaining plane (C) and the mown stalks (3) can be held in the pointed angle (W) between the parallelogram-shaped projection (51; 52) and the front edge (45a) of the plate body (45) on one hand and in the angle between the triangular-shaped projection (53; 54) and the front edge (46a) of the plate body (46) of the upper retaining plane (C) on the other.

27. Harvesting equipment in accordance with claim 26, **characterised in that** the space (55) formed by the projections (51,52; 53,54) of the said retaining planes (B; C) acting as retaining parts for the mown stalks (3) narrows against the direction of travel (F).

28. Harvesting equipment in accordance with one of claims 19 to 27, **characterised in that** the front edge (45a; 46a) of the plate bodies (45; 46) between the projections (51, 52; 53, 54) is essentially formed as an arc.

29. Harvesting equipment in accordance with one of claims 19 to 28, **characterised in that** the plate bodies (45; 46) each have an essentially arc-shaped extension (64; 65) at one end parallel to the direction of rotation (U1; U2) and at the other end a complementary recess (68; 69), with plate bodies (45; 46) of adjacent transporting chain links (25; 26) engaging in each other when assembled with a small clearance.

30. Harvesting equipment in accordance with one of the preceding claims, **characterised in that** a plate (44) carrying a carrier (31) formed as a counterblade also has an arc-shaped segment (66; 67) parallel to the direction of rotation (U1; U2) at one end and at the other end a complementary recess (70), and adjacent plate bodies (44) engage in each other with a small clearance.

31. Harvesting equipment in accordance with one of the preceding claims, **characterised in that** the curvature of the deflectors (41; 47) are also arc-shaped (64) the same as the curvature of the front edge (44a; 45a; 46a) of the plate bodies (44; 45; 46).

32. Harvesting equipment in accordance with claim 28, **characterised in that** the radius of the curvature corresponds essentially to the radius of a deflection or drive wheel arranged at the processing device close to the supply zone (14) of the endless conveyor (10; 11).

33. Harvesting equipment in accordance with one of claims 1 to 30, **characterised in that** each transporting chain link (25; 26) of the endless conveyor (10; 11) consists of two sections (37; 38) that can be assembled and locked together.

34. Harvesting equipment in accordance with one of claims I to 33, **characterised in that** adjacent transporting chain links (25; 26) have a swivelling connection (73).

35. Harvesting equipment in accordance with claim 34, **characterised in that** the swivelling connection (73) between adjacent transporting chain links (25; 26) can be formed by a bearing pin (49) assigned to the upper section (38) and a bearing pin receiving bearing eye (43) of the lower section (37) of an adjacent transporting chain link (25; 26).

36. Harvesting equipment in accordance with claim 35, **characterised in that** sealed roller bearings or grooved ball bearings are provided as bearings (72) of the swivelling connections (73).

37. Harvesting equipment in accordance with one of claims 1 to 36, **characterised in that** the arc-shaped segments (64; 66; 67) of the plate bodies (44; 45; 46) form a cover for the bearings (72).

38. Harvesting equipment in accordance with one of claims 33 to 37, **characterised in that** the sections (37; 38) of a transporting chain link (25; 26) are screwed to each other.

39. Harvesting equipment in accordance with one of claims 33 to 38, **characterised in that** the upper section (38) includes the plate bodies (45; 46) with the projections (51; 52; 53; 54) forming the holding planes and the interposed deflector (47).

40. Harvesting equipment in accordance with one of claims 33 to 39, **characterised in that** the lower section (37) includes the counterblade (31) formed as a carrier and a further deflector (41).

41. Harvesting equipment in accordance with one of claims 1 to 40, **characterised in that** the endless conveyor (10; 11) has lugs at the transporting chain links (25; 26) to engage a drive.

42. Harvesting equipment in accordance with claim 41, **characterised in that** the lugs are formed by the sleeve bodies (43) forming the bearing eye.

43. Harvesting equipment in accordance with claim 42, **characterised in that** to drive the endless conveyor (10; 11) at least two opposing deflection wheels are provided, that engage the lugs (43) and effect the rotation of the transporting chain links (25; 26).

44. Harvesting equipment in accordance with claim 43, **characterised in that** a drive wheel of the endless conveyor is assigned to the supply zone (14) and a deflection of the endless conveyor (10;11) takes place in the area of the supply zone (14) to the processing device.

45. Harvesting equipment in accordance with one of claims 1 to 44, **characterised in that** drivable additional conveyors rotating about the axis of rotation (12.1; 13.1) can be fitted in the area of the drive wheel of the endless conveyor (10; 11).

46. Harvesting equipment in accordance with one of claims 1 to 45, **characterised in that** the transporting chain links (25; 26) of the endless conveyor (10; 11) are guided in their movement between the drive and deflection wheels.

47. Harvesting equipment in accordance with one of claims 1 to 46, **characterised in that** the transporting chain links (25; 26) are provided on the back with an engaging means (29; 129) aligned parallel to the direction of rotation (U1; U2) and engaging in a corresponding recess (30; 130) of a guide strip (28; 128).

48. Harvesting equipment in accordance with claim 47, **characterised in that** the engaging means (129) is formed by an upwards-directed spigot that has a sliding or roller bearing to guide it in the recess (130).

49. Harvesting equipment in accordance with one of claims 1 to 48, **characterised in that** two endless conveyors (10; 11) oriented sideways outwards and essentially side-by-side and level with each other in operation are provided.

50. Harvesting equipment in accordance with one of claims 1 to 49, **characterised in that** leaf and plant lifters (15) are assigned to each frame carrying the endless conveyor and these each have a pyramid-shaped dividing point (16).

51. Harvesting equipment in accordance with claim 50, **characterised in that** a guide bow (17) that has an arm pointing essentially in the direction of conveyance (U1; U2) is assigned to each dividing point (16).

52. Harvesting equipment in accordance with claim 51, **characterised in that** the arm extends to the next leaf and plant lifter (15).

53. Harvesting equipment in accordance with one of claims 51 or 52, **characterised in that** the guide bow (17) is spring-mounted.

54. Harvesting equipment in accordance with claim 53, **characterised in that** by means of spring force, the guide bow (17) is preloaded against the direction of travel (F) to provide a delivery channel for the stalk crop (3) between it and the working section (18) of the endless conveyor (10;11).

55. Harvesting equipment in accordance with one of claims 1 to 54, **characterised in that** moveable cutting blades (112; 113) separate from the endless conveyor are arranged underneath the endless conveyor.

56. Harvesting equipment in accordance with one of claims 1 to 55, **characterised in that** the moveable cutting blades (112; 113) are formed as rotating disks and arranged in a plane directly underneath the movement plane of the endless conveyor and parallel to its movement track

57. Harvesting equipment in accordance with claim 56, **characterised in that** the endless conveyors with their working section extend over a supply zone running transverse to the direction of travel (F) and the rotating cutting blades (112; 113) are arranged offset to each other underneath this supply zone.

58. Harvesting equipment in accordance with one of claims 55 to 57, **characterised in that** the transporting chain links have a cutting means in a lower plane interacting with the rotating cutting blades (112; 133).

59. Harvesting equipment in accordance with one of claims 55 to 57, **characterised in that** the rotating cutting blades (112; 113) cut the crop (3) in a free cut.

60. Harvesting equipment in accordance with one of claims 55 to 59, **characterised in that** the rotating cutting blades (112; 113) are permanently mounted against the frame (110; 111) holding the endless conveyor (10; 11).

61. Harvesting equipment in accordance with claim 60, **characterised in that** the rotating cutting blades (112; 113) are mounted in two planes and run counter to each other with a height overlap.

62. Harvesting equipment in accordance with one of claims 1 to 61, **characterised in that** in the supply zone (14) a fixed counterblade (132) is provided and that the counterblade when operating is passed over underneath by carrier (31) of the cutting plane (A) at a close clearance and by a further carrier (131) at a close clearance lying parallel above carrier (31).

63. Harvesting equipment in accordance with claim 61, **characterised in that** the upper carrier (131) is fixed by projections (133), secured at the back and reaching through the deflector (41), to the transporting links (25; 26) of the conveyor (10; 11).

## Revendications

1. Moissonneuse (1) pour moissonner du maïs ou des récoltes à tige similaires, la moissonneuse comprenant au moins un transporteur (10; 11) en boucle sans fin pour recevoir la récolte, qui forme à son extrémité une zone d'amenée (14) de la récolte vers une ouverture d'entrée d'un dispositif de traitement ultérieur, en particulier une hacheuse, le transporteur sans fin comprenant des organes de transport (25; 26) maintenus l'un contre l'autre de manière articulée et présentant au moins un plan inférieur de coupe (A) tourné vers l'extérieur et comprenant des moyens de coupe et au moins un plan de retenue (B; C) situé au-dessus de lui et comprenant des moyens de retenue tournés vers l'extérieur pour les chaumes de la récolte, **caractérisée en ce qu'**un côté avant (77; 78), tourné vers les moyens de coupe et de retenue, du transporteur sans fin (10; 11) présente une configuration essentiellement fermée.

2. Moissonneuse selon la revendication 1, **caractérisée en ce que** le transporteur sans fin (10; 11) présente un plan inférieur de coupe (A) et deux plans de retenue (B; C) situés au-dessus de lui et dotés chacun de moyens de retenue des tiges.

3. Moissonneuse selon l'une des revendications 1 ou 2, **caractérisée en ce que** les moyens de retenue (53; 54) du plan supérieur de retenue (C) sont décalés par rapport au moyen de retenue (51; 52) du plan inférieur de retenue (B) en opposition à la direction d'avancement (F) dans la région du brin actif du transporteur sans fin (10; 11).

4. Moissonneuse selon l'une des revendications 1 à 3, **caractérisée en ce que** les organes de transport (25; 26) du transporteur sans fin (10; 11) sont tous deux formés d'un seul tenant ou de pièces reliées fixement les unes aux autres.

5. Moissonneuse selon l'une des revendications 1 à 4, **caractérisée en ce que** pour former la surface avant fermée de chaque organe de transport (25; 26), une première plaque d'écartement (41) qui forme un composant de l'organe de transport (25; 26) est prévue entre le plan de coupe (A) et le premier plan de retenue (B) et une deuxième plaque d'écartement (47) est prévue entre le premier plan de retenue (B) et le deuxième plan de retenue (C).

6. Moissonneuse selon la revendication 5, **caractérisée en ce que** les plaques d'écartement (41; 47) s'étendent entre les axes d'articulation (60; 61) de chaque organe de transport.

7. Moissonneuse selon l'une des revendications 5 ou 6, **caractérisée en ce que** les plaques d'écartement (41; 47) ont une forme bombée et dans la région d'amenée (14) dans laquelle s'effectue un renvoi du transporteur sans fin (10; 11), les plaques d'écartement (41; 47) d'organes de transport (25; 26) voisins forment une piste courbe sans coude essentiellement fermée dans une vue en plan.

8. Moissonneuse selon l'une des revendications 1 à 7, **caractérisée en ce que** le transporteur sans fin (10; 11) est maintenu dans un bâti, un couteau de coupe (34) étant associé au bâti et le transporteur sans fin (10; 11) pouvant se déplacer par rapport à ce couteau de coupe.

9. Moissonneuse selon la revendication 8, **caractérisée en ce que** le transporteur sans fin (10; 11) présente dans son plan de coupe (A) un dispositif inférieur d'entraînement (32; 33) qui coopère comme contre-lame avec le couteau de coupe (34).

10. Moissonneuse selon l'une des revendications 1 à 9, **caractérisée en ce qu'**au moins un racleur (42; 48) par rapport auquel le transporteur sans fin peut être déplacé est associé à la surface avant fermée du transporteur sans fin (10; 11).

11. Moissonneuse selon la revendication 10, **caractérisée en ce que** le ou les racleurs (42; 48) sont disposés dans la zone d'amenée (14) du transporteur sans fin (10; 11).

12. Moissonneuse selon l'une des revendications 10 ou 11, **caractérisée en ce que** le ou les racleurs (42; 48) sont configurés comme corps rigides posés essentiellement sur chant et disposés chacun entre deux plans de coupe et/ou de retenue (A; B; C) du transporteur sans fin.

13. Moissonneuse selon l'une des revendications 10 à 12, **caractérisée en ce que** le ou les racleurs (42; 48) recouvrent essentiellement la totalité de la distance entre un plan de coupe (A) et un plan de retenue (B) et/ou entre deux plans de retenue (B; C).

14. Moissonneuse selon l'une des revendications 10 à 13, **caractérisée en ce que** le racleur (42; 48) est maintenu dans la région de l'amenée (14) et s'étend vers l'avant, essentiellement dans la direction de déplacement (F) par son extrémité libre et s'engage dans la zone courbée de renvoi du transporteur sans fin (10; 11).

15. Moissonneuse selon la revendication 14, **caractérisée en ce que** les racleurs (42; 48) sont disposés des deux côtés d'une ouverture d'entrée vers un appareil de traitement ultérieur et forment des surfaces latérales de guidage pour la récolte.

16. Moissonneuse selon l'une des revendications 10 à 15, **caractérisée en ce que** les racleurs (42; 48) pour deux plaques d'écartement (41; 47) situées l'une au-dessus de l'autre sont rassemblés en un composant.

17. Moissonneuse selon l'une des revendications 10 à 16, **caractérisée en ce que** les racleurs (42; 48) sont réalisés en acier pour ressort.

18. Moissonneuse selon l'une des revendications 10 à 17, **caractérisée en ce que** les racleurs (42; 48) sont soutenus élastiquement par un montage à ressort.

19. Moissonneuse selon l'une des revendications 1 à 18, **caractérisée en ce qu'**un premier plan de retenue (B) du transporteur sans fin est formé par le fait que chaque organe de transport (10; 11) présente dans le plan de retenue (B) au moins un dispositif d'entraînement (51; 52) qui fait partie d'un corps en plaque (45) situé dans le plan de transport et de guidage, le corps en plaque (45) présentant au moins une saillie débordant vers l'extérieur transversalement à la direction (U1; U2) de déplacement en boucle du transporteur sans fin (10; 11), la saillie formant le dispositif d'entrainement (51; 52).

20. Moissonneuse selon l'une des revendications 1 à 19, **caractérisée en ce qu'**un deuxième plan de retenue (C) du transporteur sans fin (10; 11) est formé par le fait que chaque organe de transport (25; 26) présente dans le plan de retenue (C) au moins un dispositif d'entraînement (53; 54) qui fait partie d'un corps en plaque (46) situé dans le plan de transport et de guidage, le corps en plaque (46) présentant au moins une saillie qui déborde vers l'extérieur transversalement à la direction (U1; U2) de déplacement en boucle du transporteur sans fin (10; 11) et qui forme le dispositif d'entraînement (53: 54).

21. Moissonneuse selon l'une des revendications 19 ou 20, **caractérisée en ce qu'**un corps en plaque (45; 46) présente deux saillies (51, 52; 53, 54) qui débordent vers l'avant.

22. Moissonneuse selon la revendication 21, **caractérisée en ce que** les distances entre les saillies (51, 52; 53, 54) de chaque corps en plaque (45; 46) et les saillies (52, 51; 54, 53) d'un corps en plaque (45; 46) voisin respectif situé dans le même plan (B; C) sont sensiblement égales.

23. Moissonneuse selon l'une des revendications 19 à 22, **caractérisée en ce que** les corps en plaque (45; 46) des plans de retenue (B; C) présentent chacun deux saillies (51, 52) et (53, 54).

24. Moissonneuse selon l'une des revendications 19 à 23, **caractérisée en ce que** les saillies (51; 52) d'au moins un plan de retenue (45) sont configurées comme corps plats qui s'étendent en parallélogramme.

25. Moissonneuse selon l'une des revendications 19 à 24, **caractérisée en ce que** les saillies (53; 54) s'évasent dans le sens contraire de la direction d'avancement (F), de sorte que la distance (55) entre les saillies (53; 54) diminue dans le sens opposé à la direction d'avancement (F) dans la région du brin actif (18).

26. Moissonneuse selon l'une des revendications 19 à 25, **caractérisée en ce que** sur les corps en plaque (45; 46), des saillies (51; 52) essentiellement en parallélogramme sont formées dans le plan inférieur de retenue (B) et des saillies (53; 54) triangulaires sont formées dans le plan supérieur de retenue (C), les tiges fauchées (3) pouvant être retenues dans l'angle aigu (W) formé entre la saillie (51; 52) en parallélogramme et le bord avant (45a) du corps en plaque (45), d'une part, et d'autre part dans l'angle formé entre la saillie triangulaire (53; 54) et le bord avant (46a) du corps en plaque (46) du plan supérieur de retenue (C).

27. Moissonneuse selon la revendication 26, **caractérisée en ce que** la chambre de réception (55) des tiges fauchées (3) formée par les saillies (51, 52; 53, 54) desdits plans de retenue (B; C), qui agissent comme pièces de retenue, se rétrécit dans la direction opposée au sens d'avancement (F).

28. Moissonneuse selon l'une des revendications 19 à 27, **caractérisée en ce que** le bord avant (45a; 46a) du corps en plaque (45; 46) est configuré essentiellement en arc de cercle entre les saillies (51, 52; 53, 54).

29. Moissonneuse selon l'une des revendications 19 à 28, **caractérisée en ce que** les corps en plaque (45; 46), chacun parallèle à la direction (U1; U2) d'avancement en boucle, présente à une extrémité un élargissement (64; 65) essentiellement en arc de cercle et à l'autre extrémité une découpe complémentaire (68; 69), les corps en plaque (45; 46) d'organes de transport (25; 26) voisins s'engageant l'un dans l'autre avec un jeu réduit lorsqu'ils sont assemblés.

30. Moissonneuse selon l'une des revendications précédentes, **caractérisée en ce qu'**un corps en plaque (44), parallèle à la direction (U1; U2) d'avancement en boucle et qui porte le dispositif d'entraînement (31) configuré comme contre-lame présente également à une extrémité un segment (66; 67) en arc de cercle et à son autre extrémité une découpe complémentaire (70), des corps en plaque (44) voisins s'engageant l'un dans l'autre avec un jeu réduit.

31. Moissonneuse selon l'une des revendications précédentes, **caractérisée en ce que** la courbure des plaques d'écartement (41; 47) de même que la courbure du bord avant (44a; 45a; 46a) des corps en plaque (44; 45; 46) sont configurées en arc de cercle (64).

32. Moissonneuse selon la revendication 28, **caractérisée en ce que** le rayon de courbure correspond essentiellement au rayon d'une roue de renvoi ou d'une roue d'entraînement disposée sur le dispositif de traitement à proximité de la zone d'amenée (14) du transporteur sans fin (10; 11).

33. Moissonneuse selon l'une des revendications 1 à 30, **caractérisée en ce que** chaque organe de transport (25; 26) du transporteur sans fin (10; 11) est constitué de l'assemblage de deux parties (37; 38) et peut être bloqué.

34. Moissonneuse selon l'une des revendications 1 à 33, **caractérisée en ce que** des organes de transport (25; 26) voisins présentent une liaison (73) qui permet des déplacements de pivotement.

35. Moissonneuse selon la revendication 34, **caractérisée en ce que** la liaison (73) qui permet le pivotement entre des organes de transport (25; 26) voisins peut être réalisée par l'intermédiaire d'un tourillon de palier (49) associé à la partie supérieure (38) et d'un oeillet de montage (43) de la partie inférieure (37) d'un organe de transport (25; 26) voisin, qui reçoit le tourillon de palier.

36. Moissonneuse selon la revendication 35, **caractérisée en ce que** comme paliers (72) des liaisons (73) qui permettent le pivotement sont prévus des paliers à cylindres ou des paliers à billes et rainures, fermés hermétiquement.

37. Moissonneuse selon l'une des revendications 1 à 36, **caractérisée en ce que** les segments (64; 66; 67) en arc de cercle des corps en plaque (44; 45; 46) forment un recouvrement des paliers (72) .

38. Moissonneuse selon l'une des revendications 33 à 37, **caractérisée en ce que** les parties (37; 38) d'un organe de transport (25; 26) sont vissées les unes aux autres.

39. Moissonneuse selon l'une des revendications 33 à 38, **caractérisée en ce que** la partie supérieure (38) comprend les corps en plaque (45; 46) avec les saillies (51; 52; 53; 54) qui forment les plans de retenue et la plaque d'écartement (47) située entre ces saillies.

40. Moissonneuse selon l'une des revendications 33 à 39, **caractérisée en ce que** la partie inférieure (37) comprend la contre-lame (31) configurée comme dispositif d'entraînement et une autre plaque d'écartement (41).

41. Moissonneuse selon l'une des revendications 1 à 40, **caractérisée en ce que** sur les organes d'avancement (25; 26), le transporteur sans fin (10; 11) présente des appendices qui permettent l'engagement d'un entraînement.

42. Moissonneuse selon la revendication 41, **caractérisée en ce que** les appendices sont formés par des corps (43) en manchon qui forment l'oeillet de montage.

43. Moissonneuse selon la revendication 42, **caractérisée en ce qu'**au moins deux roues de renvoi opposées l'une à l'autre, qui s'engagent sur les appendices (43) et qui ont pour effet le déplacement en boucle des organes de transport (25; 26) sont prévues pour l'entraînement du transporteur sans fin (10; 11).

44. Moissonneuse selon la revendication 43, **caractérisée en ce qu'**une roue d'entraînement du transporteur sans fin est associée à la zone d'amenée (14) et **en ce qu'**un renvoi du transporteur sans fin (10; 11) a lieu dans la région de l'amen (14) dans le dispositif de traitement ultérieur.

45. Moissonneuse selon l'une des revendications 1 à 44, **caractérisée en ce que** des transporteurs supplémentaires qui peuvent être entraînés en rotation autour de l'axe de rotation (12.1; 13.1) peuvent être installés dans la région de la roue d'entraînement du transporteur sans fin (10; 11).

46. Moissonneuse selon l'une des revendications 1 à 45, **caractérisée en ce que** les organes de transport (25; 26) du transporteur sans fin (10; 11) sont guidés pendant leur déplacement entre la roue d'entraînement et la roue de renvoi.

47. Moissonneuse selon l'une des revendications 1 à 46, **caractérisée en ce que** sur leur côté arrière, les organes de transport (25; 26) sont dotés d'un moyen d'engagement (29; 129) parallèle à la direction (U1; U2) d'avancement en boucle et qui s'engage dans une découpe correspondante (30; 130) d'une latte de guidage (28; 128).

48. Moissonneuse selon la revendication 47, **caractérisée en ce que** le moyen d'engagement (129) est formé par un tourillon orienté vers le haut qui présente un palier à coulissement ou à cylindres pour être guidé dans la découpe (130).

49. Moissonneuse selon l'une des revendications 1 à 48, **caractérisée en ce que** deux transporteurs sans fin (10; 11) qui sont tournés latéralement vers l'extérieur et qui sont situés en fonctionnement essentiellement en alignement latéral sont prévus.

50. Moissonneuse selon l'une des revendications 1 à 49, **caractérisée en ce que** des dispositifs (15) de relèvement de feuilles et de plantes sont associés à chaque bâti qui porte le transporteur sans fin, chaque dispositif de relèvement comprenant une pointe (16) de division en pyramide.

51. Moissonneuse selon la revendication 50, **caractérisée en ce qu'**à chaque pointe de division (16) est associé un étrier de guidage (17) qui comprend un bras essentiellement tourné dans la direction (U1; U2) du transport.

52. Moissonneuse selon la revendication 51, **caractérisée en ce que** le bras s'étend jusqu'au dispositif suivant (15) de relèvement des feuilles et des plantes.

53. Moissonneuse selon l'une des revendications 51 ou 52, **caractérisée en ce que** l'étrier de guidage (17) est monté sur ressort.

54. Moissonneuse selon la revendication 53, **caractérisée en ce que** pour former un canal de transport pour la récolte fauchée (3), qui est formé entre l'étrier de guidage (17) et le brin actif (18) du transporteur sans fin (10; 11), la force de ressort de l'étrier de guidage est précontrainte dans la direction opposée à la direction d'avancement (F).

55. Moissonneuse selon l'une des revendications 1 à 54, **caractérisée en ce que** des couteaux de coupe mobiles (112; 113), séparés des transporteurs sans fin, sont situés en dessous des transporteurs sans fin.

56. Moissonneuse selon la revendication 55, **caractérisée en ce que** les couteaux de coupe (112; 113) mobiles sont configurés comme plaques rotatives et sont disposés dans un plan situé directement en dessous du plan de déplacement du transporteur sans fin et parallèlement à son parcours de déplacement.

57. Moissonneuse selon la revendication 56, **caractérisée en ce qu'**avec leur brin actif, les transporteurs sans fin recouvrent une zone de transport qui s'étend transversalement par rapport à la direction d'avancement (F) et **en ce que** les couteaux de coupe rotatifs (112; 113) sont disposés les uns à côté des autres en gradins en dessous de cette zone de transport.

58. Moissonneuse selon l'une des revendications 55 à 57, **caractérisée en ce que** les organes de transport présentent dans un plan inférieur des moyens de coupe qui coopèrent avec les couteaux de coupe rotatifs (112; 113).

59. Moissonneuse selon l'une des revendications 55 à 57, **caractérisée en ce que** les couteaux de coupe rotatifs (112; 113) découpent la récolte (3) par coupe libre.

60. Moissonneuse selon l'une des revendications 55 à 59, **caractérisée en ce que** les couteaux de coupe rotatifs (112; 113) sont montés en position fixe par rapport au bâti (110; 111) qui retient les transporteurs sans fin (10; 11).

61. Moissonneuse selon la revendication 60, **caractérisée en ce que** les couteaux de coupe rotatifs (112; 113) s'étendent dans deux plans et sont montés en superposition mutuelle avec décalage en hauteur.

62. Moissonneuse selon l'une des revendications 1 à 61, **caractérisée en ce qu'**une contre-lame (132) fixe est prévue dans la région de l'amenée (14) et, en fonctionnement, est balayée à distance étroite par-dessous par le dispositif d'entraînement (31) du plan de coupe (A) et est balayée à distance étroite par-dessus par un autre dispositif d'entraînement (131) disposé parallèlement au-dessus du dispositif d'entraînement (31).

63. Moissonneuse selon la revendication 61, **caractérisée en ce que** le dispositif supérieur d'entraînement (131) est fixé sur les organes de transport (25; 26) des transporteurs (10, 11) au moyen de saillies (133) qui traversent la plaque d'écartement (41) et fixées sur le côté arrière.
